# EUROPEAN PATENT APPLICATION

(11) **EP 4 246 631 A1**
(43) Date of publication of application: **20.09.2023**
(21) Application number: 21903470.9
(22) Date of filing: 09.12.2021
(51) Int. Cl.: H01M 4/62, H01G 11/56, H01G 11/84, H01B 1/06, H01B 1/10, H01M 10/052, H01M 10/0562

(54) **SULFIDE SOLID ELECTROLYTE, METHOD FOR SELECTING ELEMENTS FOR SULFIDE SOLID ELECTROLYTE, METHOD FOR MANUFACTURING SULFIDE SOLID ELECTROLYTE, POWER STORAGE ELEMENT, ELECTRONIC DEVICE, AND AUTOMOBILE**

(30) Priority: 10.12.2020 JP 2020205314; 10.12.2020 JP 2020205317
(71) Applicant: GS Yuasa International Ltd., Kisshoin, Minami-ku, Kyoto-shi, Kyoto 601-8520 (JP)
(72) Inventor: FUKUSHIMA Akihiro, Kyoto-shi, Kyoto 601-8520 (JP); NISHII Katsuya, Kyoto-shi, Kyoto 601-8520 (JP)
(74) Representative: Isarpatent
(86) International application number: PCT/JP2021/045342
(87) International publication number: WO 2022/124371

(57) **Abstract**

One aspect of the present invention is a sulfide solid electrolyte, having diffraction peaks in a range of 19.9° ± 0.5° and a range of 23.6° ± 0.5° in an X-ray diffraction diagram using a CuKα ray and including one or two or more kinds of divalent elements A and one or two or more kinds of halogen elements X, in which the divalent element A and the halogen element X are a combination in which hydration energy of a compound A_{0.5}X composed of the divalent element A and the halogen element X is greater than hydration energy of LiI.

## Description

### TECHNICAL FIELD

The present invention relates to a sulfide solid electrolyte, a method for selecting elements for a sulfide solid electrolyte, a method for producing a sulfide solid electrolyte, an energy storage element, an electronic device, and an automobile.

### BACKGROUND ART

A lithium ion secondary battery is widely used for electronic devices such as a personal computer and a communication terminal, an automobile, and the like because of the high energy density. The lithium ion secondary battery generally includes a pair of electrodes, which are electrically separated from each other by a separator, and a nonaqueous electrolyte interposed between the electrodes, and is configured to allow lithium ions to be transferred between the two electrodes for charge-discharge. A capacitor such as a lithium ion capacitor is also widely used as an energy storage element other than the lithium ion secondary battery.

In recent years, as a nonaqueous electrolyte, an energy storage element using a solid electrolyte such as a sulfide solid electrolyte has been proposed in place of a nonaqueous electrolyte solution in which an electrolyte salt is dissolved in a liquid such as an organic solvent. As one of sulfide solid electrolytes, Patent Document 1 discloses a sulfide solid electrolyte which is characterized by including Li, A (A is at least one kind of P, Si, Ge, Al, and B), X (X is a halogen), and S, being a glass ceramic, and having peaks at 2θ = 20.2° and 23.6° in X-ray diffraction measurement using a CuKα ray. In Patent Document 1, specifically, a sulfide solid electrolyte represented by the composition formula xLiI·(100-x)(0.75Li₂S·0.25P₂S₅) is synthesized, and the ionic conductivity and the like are evaluated.

### PRIOR ART DOCUMENT

### PATENT DOCUMENT

Patent Document 1: JP-A-2013-016423

### SUMMARY OF THE INVENTION

### PROBLEMS TO BE SOLVED BY THE INVENTION

A specific crystal structure having diffraction peaks in a range of 19.9° ± 0.5° and a range of 23.6° ± 0.5° in an X-ray diffraction diagram using a CuKα ray is known to be a phase with high ionic conductivity (HICP: High Ion Conduction Phase). However, the present inventors have found that a sulfide solid electrolyte containing HICP is easily hydrated, and even if the sulfide solid electrolyte is left to stand in a dry air atmosphere with little moisture, the ionic conductivity is easily decreased due to hydration with the moisture contained in the air.

The present invention has been made based on the above circumstances, and an object of the present invention is to provide a sulfide solid electrolyte, which contains HICP and has favorable water resistance; a method for selecting elements suitable for obtaining such a sulfide solid electrolyte; a method for producing such a sulfide solid electrolyte; an energy storage element using such a sulfide solid electrolyte; an electronic device using such an energy storage element; and an automobile using such an energy storage element.

### MEANS FOR SOLVING THE PROBLEMS

One aspect of the present invention made to solve the above problems is a sulfide solid electrolyte (α), having diffraction peaks in a range of 19.9° ± 0.5° and a range of 23.6° ± 0.5° in an X-ray diffraction diagram using a CuKα ray, and including one or two or more kinds of divalent elements A and one or two or more kinds of halogen elements X, in which the divalent element A and the halogen element X are a combination in which hydration energy of a compound A_{0.5}X composed of the divalent element A and the halogen element X is greater than hydration energy of LiI.

Another aspect of the present invention is a method for selecting elements for a sulfide solid electrolyte, including selecting a divalent element A and a halogen element X in a sulfide solid electrolyte containing one or two or more kinds of the divalent elements A and one or two or more kinds of the halogen elements X, and in the selecting, a combination in which hydration energy of a compound A_{0.5}X composed of the divalent element A and the halogen element X is greater than hydration energy of LiI, determined by first-principle calculation is selected.

Another aspect of the present invention is a sulfide solid electrolyte (β), having diffraction peaks in a range of 19.9° ± 0.5° and a range of 23.6° ± 0.5° in an X-ray diffraction diagram using a CuKα ray, and containing one or two or more kinds of divalent elements A and one or two or more kinds of halogen elements X, selected by the method for selecting elements according to one aspect of the present invention.

Another aspect of the present invention is a method for producing a sulfide solid electrolyte (α), including treating a composition containing one or two or more kinds of divalent elements A and one or two or more kinds of halogen elements X, selected by the method for selecting elements according to one aspect of the present invention.

Another aspect of the present invention is a method for producing a sulfide solid electrolyte (β), including treating a composition containing one or two or more kinds of divalent elements A and one or two or more kinds of halogen elements X, in which the divalent element A and the halogen element X are a combination in which hydration energy of a compound A_{0.5}X composed of the divalent element A and the halogen element X is greater than hydration energy of LiI.

Another aspect of the present invention is an energy storage element containing the sulfide solid electrolyte (α) or sulfide solid electrolyte (β) according to one aspect of the present invention.

Another aspect of the present invention is an electronic device including the energy storage element according to one aspect of the present invention.

Another aspect of the present invention is an automobile including the energy storage element according to one aspect of the present invention.

### ADVANTAGES OF THE INVENTION

According to any one of the aspects of the present invention, a sulfide solid electrolyte, which contains HICP and has favorable water resistance; a method for selecting elements suitable for obtaining such a sulfide solid electrolyte; a method for producing such a sulfide solid electrolyte; an energy storage element using such a sulfide solid electrolyte; an electronic device using such an energy storage element; and an automobile using such an energy storage element can be provided.

### BRIEF DESCRIPTION OF THE DRAWINGS

Fig. 1 shows a schematic cross-sectional view of an all-solid-state battery as one embodiment of the energy storage element of the present invention.
Fig. 2 shows a schematic view illustrating an energy storage apparatus configured by aggregating multiple energy storage elements according to one embodiment of the present invention.
Fig. 3 shows X-ray diffraction diagrams of sulfide solid electrolytes of Examples 1 to 6 and Comparative Example 1.
Fig. 4 shows X-ray diffraction diagrams of sulfide solid electrolytes of Example 2 and Comparative Example 3.
Fig. 5 shows X-ray diffraction diagrams of sulfide solid electrolytes of Reference Examples 1 and 2.

### MODE FOR CARRYING OUT THE INVENTION

First, outlines of a sulfide solid electrolyte, a method for selecting elements for a sulfide solid electrolyte, a method for producing a sulfide solid electrolyte, an energy storage element, an electronic device, and an automobile, which are disclosed in the present specification, will be described.

The sulfide solid electrolyte according to one aspect of the present invention is a sulfide solid electrolyte (α), having diffraction peaks in a range of 19.9° ± 0.5° and a range of 23.6° ± 0.5° in an X-ray diffraction diagram using a CuKα ray, and including one or two or more kinds of divalent elements A and one or two or more kinds of halogen elements X, in which the divalent element A and the halogen element X are a combination in which hydration energy of a compound A_{0.5}X composed of the divalent element A and the halogen element X is greater than hydration energy of LiI.

The sulfide solid electrolyte (α) contains HICP (High Ion Conduction Phase) being a specific crystal structure having diffraction peaks in a range of 19.9° ± 0.5° and a range of 23.6° ± 0.5° in an X-ray diffraction diagram using a CuKα ray, and has favorable water resistance. Although the reason why such an effect occurs is not clear, the following reason is presumed. It is considered that the low water resistance of a sulfide solid electrolyte containing HICP, such as a conventional Li₂S-P₂S₅-LiI-based solid electrolyte disclosed in Patent Document 1 or the like is influenced by the easiness of hydration in a part derived from or related to LiI. In contrast, the sulfide solid electrolyte (α) contains a divalent element A and a halogen element X that are a combination in which hydration energy of the compound A_{0.5}X is greater than hydration energy of LiI. For this reason, it is presumed that the sulfide solid electrolyte (α) becomes hardly hydrated and exhibits favorable water resistance. The sulfide solid electrolyte (α) is not limited to a sulfide solid electrolyte that uses a compound A_{0.5}X as a raw material.

The expression "having diffraction peaks in a range of 19.9° ± 0.5° and a range of 23.6° ± 0.5° in an X-ray diffraction diagram using a CuKα ray" can be confirmed by powder X-ray diffraction measurement using a CuKα ray. The powder X-ray diffraction measurement is performed by the following procedures. An airtight sample holder for X-ray diffraction measurement is filled with a sulfide solid electrolyte powder to be measured in an argon atmosphere having a dew point of -50°C or lower. The powder X-ray diffraction measurement is performed by using an X-ray diffractometer ("MiniFlex II" from Rigaku Corporation). A CuKα ray is used as a radiation source, a tube voltage is set to 30 kV, and a tube current is set to 15 mA. The diffracted X-ray passes through a Kβ filter having a thickness of 30 µm to perform the detection by a high-speed one-dimensional detector (model number: D/teX Ultra 2). A sampling width is set to 0.01°, a scanning speed is set to 5°/min, a divergence slit width is set to 0.625°, a light receiving slit width is set to 13 mm (OPEN), and a scattering slit width is set to 8 mm.

The term "divalent element" refers to an element that can become a divalent cation. The divalent element may be any element capable of becoming an ion of any other valence as long as it can become a divalent cation.

The value of "hydration energy" of each of a compound A_{0.5}X and LiI is determined by first-principle calculation that will be described later as an explanation of the method for selecting elements for a sulfide solid electrolyte according to one embodiment of the present invention.

In the sulfide solid electrolyte (α), it is preferable that the divalent element A and the halogen element X are a combination in which hydration energy of a compound A_{0.5}X composed of the divalent element A and the halogen element X is -4 meV/atom or more.

In the sulfide solid electrolyte (α), it is preferable that the divalent element A and the halogen element X are a combination in which hydration energy of a compound A_{0.5}X composed of the divalent element A and the halogen element X is 0 meV/atom or more.

In the sulfide solid electrolyte (α), it is preferable that the divalent element A and the halogen element X are a combination in which hydration energy of a compound A_{0.5}X composed of the divalent element A and the halogen element X is 2 meV/atom or more.

In the sulfide solid electrolyte (α), it is preferable that the divalent element A and the halogen element X are a combination in which hydration energy of a compound A_{0.5}X composed of the divalent element A and the halogen element X is 4 meV/atom or more.

In the sulfide solid electrolyte (α), the divalent element A and the halogen element X may be a combination in which hydration energy of a compound A_{0.5}X composed of the divalent element A and the halogen element X is 200 meV/atom or less.

The sulfide solid electrolyte (α) preferably satisfies any of the following a to c.
a: the divalent element A is one or two or more kinds of elements selected from the group consisting of Ca, Sr, Ba, Mn, and Zn, and the halogen element X is one or two or more kinds of elements selected from the group consisting of F, Cl, Br, and I.
b: the divalent element A is Mg, and the halogen element X is F.
c: the divalent element A is Cu, and the halogen element X is one or two or more kinds of elements selected from the group consisting of Cl, Br, and I.

The above a to c are a combination of a divalent element A and a halogen element X, in which hydration energy of the compound A_{0.5}X is greater than hydration energy of LiI, determined by first-principle calculation that will be described later. Therefore, when the sulfide solid electrolyte (α) satisfies any of the a to c, the water resistance becomes more favorable.

The sulfide solid electrolyte (α) preferably satisfies either the following a1 or a2.
a1: the divalent element A is one or two or more kinds of elements selected from the group consisting of Ca, Ba, Mn, and Zn, and the halogen element X is one or two or more kinds of elements selected from the group consisting of F, Cl, Br, and I.
a2: the divalent element A is Sr, and the halogen element X is one or two or more kinds of elements selected from the group consisting of F, Cl, and Br.

The above a1 and a2 are a combination of a divalent element A and a halogen element X, in which hydration energy of the compound A_{0.5}X is 0 meV/atom or more, determined by first-principle calculation (see Table 3). Therefore, when the divalent element A and the halogen element X are such a combination, the water resistance of the sulfide solid electrolyte (α) becomes more favorable.

The sulfide solid electrolyte (α) preferably contains I. The sulfide solid electrolyte containing HICP tends to have high ionic conductivity when containing I. Therefore, when the sulfide solid electrolyte (α) contains I, the ionic conductivity may become more favorable.

It is preferable that the sulfide solid electrolyte (α) further includes Li, and a molar ratio of a content of the divalent element A to a content of the Li is 0.001 or more, and a molar ratio of a content of the halogen element X to a content of the divalent element A is 2 or more. When Li, the divalent element A, and the halogen element X are contained at such a ratio, the water resistance becomes more favorable.

In the sulfide solid electrolyte (α), a molar ratio of a content of the divalent element A to a content of the Li is preferably 0.018 or more. When Li, the divalent element A, and the halogen element X are contained at such a ratio, the water resistance of the sulfide solid electrolyte (α) becomes more favorable.

The sulfide solid electrolyte (α) is preferably represented by the following formula 1.
[Chemical Formula 1]

(100 - y - z - z')[xLi₂S·(1 - x)P₂S₅]·yA_{0.5}X·zLiIz'LiX'wY . . . 1

In the above formula 1, A is the divalent element A. X is the halogen element X. X' is a halogen element other than I. Y is one or two or more kinds of elements other than Li, P, S, I, A, X, and X'. x is the number of 0.5 or more and 0.8 or less. y is the number greater than 0 and 30 or less. z is the number of 0 or more and 30 or less. z' is the number of 0 or more and 30 or less. w is the number of 0 or more and 20 or less.

When the sulfide solid electrolyte (α) has such a composition, the water resistance becomes more favorable.

In the formula 1, it is preferable that a ratio (z/y) of the z to the y is 0 or more and 10 or less. In such a case, although a part derived from or related to LiI, which is easily hydrated, is sufficiently replaced with a part derived from or related to a compound A_{0.5}X, which is hardly hydrated, the water resistance tends to be further enhanced.

It is preferable that the sulfide solid electrolyte (α) includes P, and a molar ratio of a content of the divalent element A to a content of the P is 0.01 or more and 0.4 or less.

It is preferable that the sulfide solid electrolyte (α) includes P and Li, and a molar ratio of a content of the Li to a content of the P is 1 or more and 5 or less.

It is preferable that the sulfide solid electrolyte (α) includes P and S, and a molar ratio of a content of the S to a content of the P is 2 or more and 6 or less.

It is preferable that the sulfide solid electrolyte (α) includes P, and a molar ratio of a content of the halogen element X to a content of the P is 0.1 or more and 2 or less.

It is preferable that the sulfide solid electrolyte (α) has an ionic conductivity of 1 mS/cm or more at 25°C.

It is preferable that in the sulfide solid electrolyte (α), the diffraction peak in a range of 19.9° ± 0.5° is a diffraction peak with the highest diffraction intensity, a diffraction peak with the second highest diffraction intensity, a diffraction peak with the third highest diffraction intensity, or a diffraction peak with the fourth highest diffraction intensity, in an X-ray diffraction diagram using a CuKα ray. As described above, a diffraction peak in a range of 19.9° ± 0.5° is derived from HICP. Therefore, in such a case, high ionic conductivity can be exhibited in the solid electrolyte (α) although HICP is sufficiently formed.

It is preferable that in the sulfide solid electrolyte (α), activation energy of ionic conductivity is 0.34 eV or less. The activation energy of ionic conductivity represents a degree of temperature dependence of the ionic conductivity. When the sulfide solid electrolyte (α) has such an activation energy of ionic conductivity, the ionic conductivity becomes favorable in a wide temperature range from high temperature to low temperature.

The method for selecting elements for a sulfide solid electrolyte according to another aspect of the present invention includes selecting a divalent element A and a halogen element X in a sulfide solid electrolyte containing one or two or more kinds of the divalent elements A and one or two or more kinds of the halogen elements X, and in the selecting, a combination in which hydration energy of a compound A_{0.5}X composed of the divalent element A and the halogen element X is greater than hydration energy of LiI, determined by first-principle calculation is selected.

According to the method for selecting elements, a divalent element A and a halogen element X, which are suitable for obtaining a sulfide solid electrolyte having favorable water resistance, can be efficiently selected.

The sulfide solid electrolyte according to another aspect of the present invention is a sulfide solid electrolyte (β), having diffraction peaks in a range of 19.9° ± 0.5° and a range of 23.6° ± 0.5° in an X-ray diffraction diagram using a CuKα ray, and containing one or two or more kinds of divalent elements A and one or two or more kinds of halogen elements X, selected by the method for selecting elements according to one aspect of the present invention.

The sulfide solid electrolyte (β) contains HICP and has favorable water resistance for the same reason as that in the sulfide solid electrolyte (α).

The method for producing a sulfide solid electrolyte according to another aspect of the present invention is a method for producing a sulfide solid electrolyte (α), including treating a composition containing one or two or more kinds of divalent elements A and one or two or more kinds of halogen elements X, selected by the method for selecting elements according to one aspect of the present invention.

According to the production method (α), a sulfide solid electrolyte having favorable water resistance can be produced.

The term "composition" means a mixture obtained by mixing two or more kinds of compounds or simple substances (hereinafter, the compound and the simple substance are also collectively referred to as a compound and the like). It is sufficient if the entire composition, that is, any of a compound and the like contained in the composition contains a divalent element A and a halogen element X. Further, the composition may contain a compound and the like that contain no divalent element A and no halogen element X.

The method for producing a sulfide solid electrolyte according to another aspect of the present invention is a method for producing a sulfide solid electrolyte (β), including treating a composition containing one or two or more kinds of divalent elements A and one or two or more kinds of halogen elements X, in which the divalent element A and the halogen element X are a combination in which hydration energy of a compound A_{0.5}X composed of the divalent element A and the halogen element X is greater than hydration energy of LiI.

According to the production method (β), a sulfide solid electrolyte having favorable water resistance can be produced.

In the production method (α) and production method (6), it may be preferable that the composition contains no lithium halide. By using the composition, a sulfide solid electrolyte having more favorable water resistance may be produced.

The energy storage element according to one aspect of the present invention is an energy storage element containing the sulfide solid electrolyte (α) or sulfide solid electrolyte (β) according to one aspect of the present invention. The energy storage element uses a sulfide solid electrolyte containing HICP and having favorable water resistance, and thus, even when the sulfide solid electrolyte containing HICP is exposed to an air atmosphere even temporarily during the production process or the like, reaction of the sulfide solid electrolyte with the water in the air is suppressed, and favorable energy storage element performance is exhibited.

The electronic device according to one aspect of the present invention is an electronic device including the energy storage element according to one aspect of the present invention. The electronic device includes an energy storage element that uses a sulfide solid electrolyte containing HICP and having favorable water resistance, and thus exhibits favorable electronic device performance.

The automobile according to one aspect of the present invention is an automobile including the energy storage element according to one aspect of the present invention. The automobile includes an energy storage element that uses a sulfide solid electrolyte containing HICP and having favorable water resistance, and thus exhibits favorable automobile performance.

Hereinafter, the sulfide solid electrolyte, method for selecting elements for a sulfide solid electrolyte, method for producing a sulfide solid electrolyte, energy storage element, and energy storage apparatus according to one embodiment of the present invention, and other embodiments will be described in detail. The names of the respective constituent members (respective constituent elements) used in respective embodiments may be different from the names of the respective constituent members (respective constituent elements) used in the background art.

### <Sulfide Solid Electrolyte>

### (Crystal structure)

The sulfide solid electrolyte according to one embodiment of the present invention contains HICP as a crystal structure. That is, the sulfide solid electrolyte has diffraction peaks at a diffraction angle 2θ in a range of 19.9° ± 0.5° and a range of 23.6° ± 0.5° in an X-ray diffraction diagram using a CuKα ray. The diffraction peak in a range of 19.9° ± 0.5° is more preferably present in a range of 19.9 ± 0.4°, and still more preferably present in a range of 19.9 ± 0.3°.

The sulfide solid electrolyte may further contain a crystal structure other than the HICP. Examples of other crystal structures include LGPS type, argyrodite type, Li₇P₃S₁₁, and Thio-LISICON type. The sulfide solid electrolyte may contain an amorphous part.

It is preferable that the sulfide solid electrolyte contains no phase with low ionic conductivity (LICP: Low Ion Conduction Phase) having diffraction peaks at a diffraction angle 2θ in a range of 21.0° ± 0.5° and a range of 28.0° ± 0.5° in an X-ray diffraction diagram using a CuKα ray, or contains relatively less LICP as compared with HICP. In such a case, the ionic conductivity of the sulfide solid electrolyte may be further enhanced.

In the sulfide solid electrolyte (α), any of a diffraction peak with the highest diffraction intensity, a diffraction peak with the second highest diffraction intensity, a diffraction peak with the third highest diffraction intensity, or a diffraction peak with the fourth highest diffraction intensity is preferably in a range of 19.9° ± 0.5°, any of a diffraction peak with the highest diffraction intensity, a diffraction peak with the second highest diffraction intensity, or a diffraction peak with the third highest diffraction intensity is more preferably in a range of 19.9° ± 0.5°, and a diffraction peak with the highest diffraction intensity or a diffraction peak with the second highest diffraction intensity is still more preferably in a range of 19.9° ± 0.5°, in an X-ray diffraction diagram using a CuKα ray. As described above, a diffraction peak in a range of 19.9° ± 0.5° is derived from HICP. Therefore, in such a case, high ionic conductivity can be exhibited in the sulfide solid electrolyte although HICP is sufficiently formed.

### (Composition)

The sulfide solid electrolyte according to one embodiment of the present invention contains one or two or more kinds of divalent elements A, and one or two or more kinds of halogen elements X.

In the sulfide solid electrolyte according to one embodiment of the present invention, the divalent element A and the halogen element X are a combination in which hydration energy of a compound A_{0.5}X composed of these elements A and X is greater than hydration energy of LiI. The hydration energies of the compound A_{0.5}X and LiI are determined by first-principle calculation that will be detailed later, and the hydration energy of LiI is -11.5 meV/atom. Therefore, the combination may be a combination of a divalent element A and a halogen element X, in which the hydration energy of the compound A_{0.5}X exceeds -11.5 meV/atom. The combination of a divalent element A and a halogen element X is preferably a combination in which the hydration energy of the compound A_{0.5}X is -4 meV/atom or more, 0 meV/atom or more, 2 meV/atom or more, or 4 meV/atom or more. Meanwhile, the upper limit of the hydration energy of the compound A_{0.5}X may be, for example, 200 meV/atom, or may be 100 meV/atom.

One or both of the divalent element A and the halogen element X may be constituted of two or more kinds of elements. For example, when the divalent element A is constituted of A1 and A2, a molar ratio of A1 to A2 is a1 : a2, the halogen element X is constituted of X1 and X2, and a molar ratio of X1 to X2 is x1 : x2, the combination may be a combination in which hydration energy of (A1ₐ₁A2ₐ₂)_{0.5}(X1ₓ₁X2ₓ₂) is greater than hydration energy of LiI.

Examples of the divalent element A include Group II elements (alkaline earth metals) such as Mg, Ca, Sr, and Ba, Mn, Cu, and Zn. As the divalent element A, an element of Group II may be preferable, or a fourth period element (such as Ca, Mn, Cu, and Zn) may be preferable. As the divalent element A, Ca, Ba, Mn, and Zn may be preferable.

When a monovalent element other than Li (element other than Li, which can become a monovalent cation) is used in place of the divalent element A, a crystal structure of a compound containing the monovalent element used as a raw material may remain depending on the production method, resulting in degradation of the performance of a sulfide solid electrolyte to be obtained. In contrast, a compound containing a divalent element A has a crystal structure that is easily broken by, for example, a mechanical milling treatment, and thus, a crystal structure of the compound used as a raw material hardly remains, and degradation of the performance of a sulfide solid electrolyte to be obtained can be suppressed.

Examples of the halogen element X include F, Cl, Br, and I, and among them, Br and I are preferable, and I is more preferable.

In the sulfide solid electrolyte, it is preferable that the combination of the divalent element A and the halogen element X satisfies any of the following a to c.
a: the divalent element A is one or two or more kinds of elements selected from the group consisting of Ca, Sr, Ba, Mn, and Zn, and the halogen element X is one or two or more kinds of elements selected from the group consisting of F, Cl, Br, and I.
b: the divalent element A is Mg, and the halogen element X is F.
c: the divalent element A is Cu, and the halogen element X is one or two or more kinds of elements selected from the group consisting of Cl, Br, and I.

The above a to c are a combination of a divalent element A and a halogen element X, in which hydration energy of the compound A_{0.5}X is greater than hydration energy (-11.5 meV/atom) of LiI, determined by first-principle calculation (see Table 3).

The above a is preferably the following a1 or a2.
a1: the divalent element A is one or two or more kinds of elements selected from the group consisting of Ca, Ba, Mn, and Zn, and the halogen element X is one or two or more kinds of elements selected from the group consisting of F, Cl, Br, and I.
a2: the divalent element A is Sr, and the halogen element X is one or two or more kinds of elements selected from the group consisting of F, Cl, and Br.

The above a1, a2, b, and c are a combination of a divalent element A and a halogen element X, in which hydration energy of the compound A_{0.5}X is 0 meV/atom or more, determined by first-principle calculation (see Table 3). Therefore, when the divalent element A and the halogen element X are such a combination, the water resistance of the sulfide solid electrolyte becomes more favorable.

In the above a1, when the halogen element X includes F (for example, X includes F of greater than 0 mol%, for example, 1 mol% or more, typically 3 mol% or more, and less than 50 mol%, for example, 40 mol% or less, typically 20 mol% or less), the divalent element A is preferably one or two kinds of elements of Ca, Ba, and Mn. Among them, Ca or Ba, or a combination of two kinds of Ca and Ba is preferable, and a composition having a high content of such elements is suitable. In particular, it is suitable that A is Ca or has a high content of Ca (for example, A includes Ca of 50 mol% or more, for example, 75 mol% or more, typically 90 mol% or more).

In the above a1, when the halogen element X includes Cl (for example, X includes Cl of greater than 0 mol%, for example, 1 mol% or more, typically 3 mol% or more, and less than 50 mol%, for example, 40 mol% or less, typically 20 mol% or less), the divalent element A is preferably one or two kinds of elements of Ba, Mn, and Zn. Among them, Ba or Zn, or a combination of two kinds of Ba and Zn is preferable, and a composition having a high content of such elements is suitable. In particular, it is suitable that A is Zn or has a high content of Zn (for example, A includes Zn of 50 mol% or more, for example, 75 mol% or more, typically 90 mol% or more).

In the above a1, when the halogen element X includes Br (for example, X includes Br of 10 mol% or more, for example, 30 mol% or more, typically 50 mol% or more), the divalent element A is preferably one or two kinds of elements of Ba, Mn, and Zn. Among them, Mn or Zn, or a combination of two kinds of Mn and Zn is preferable, and a composition having a high content of such elements is suitable. In particular, it is suitable that A is Zn or has a high content of Zn (for example, A includes Zn of 50 mol% or more, for example, 75 mol% or more, typically 90 mol% or more).

In the above a1, when the halogen element X includes I (for example, X includes I of 10 mol% or more, for example, 30 mol% or more, typically 50 mol% or more), the divalent element A is preferably one or two kinds of elements of Ca, Mn, and Zn. Among them, Mn or Ca, or a combination of two kinds of Mn and Ca is preferable, and a composition having a high content of such elements is suitable. In particular, it is suitable that A is Ca or has a high content of Ca (for example, A includes Ca of 50 mol% or more, for example, 75 mol% or more, typically 90 mol% or more).

In the above a2, when the divalent element A includes Sr (for example, A includes Sr of 30 mol% or more, for example, 50 mol% or more, typically 75 mol% or more), it is preferable that the halogen element X is Br or a combination of Br and F and/or Cl, and it is suitable that the content of Br is high (for example, X includes Br of 50 mol% or more, for example, 60 mol% or more, typically 70 mol% or more).

In the above b, when the divalent element A includes Mg (for example, A includes Mg of 30 mol% or more, for example, 50 mol% or more, typically 75 mol% or more), it is suitable that the halogen element X is F or has a high content of F (for example, X includes F of 10 mol% or more, for example, 30 mol% or more, typically 50 mol% or more).

In the above c, when the divalent element A includes Cu (for example, A includes Cu of 30 mol% or more, for example, 50 mol% or more, typically 75 mol% or more), the halogen element X is preferably Br or I or a combination of two kinds of Br and I, and a composition having a high content of such elements is suitable. In particular, it is suitable that X is Br or has a high content of Br (for example, X includes Br of 50 mol% or more, for example, 60 mol% or more, typically 70 mol% or more).

In the sulfide solid electrolyte, the halogen element X preferably includes at least I. The sulfide solid electrolyte containing HICP tends to have high ionic conductivity when containing I. Therefore, when the halogen element X contains I, the ionic conductivity may become more favorable.

In the sulfide solid electrolyte, the halogen element X preferably includes Br. The sulfide solid electrolyte containing HICP may have high ionic conductivity when containing Br.

In the sulfide solid electrolyte, the halogen element X more preferably contains Br and I. The sulfide solid electrolyte containing HICP tends to have high ionic conductivity when containing Br and I. Therefore, when the halogen element X contains Br and I, the ionic conductivity may become more favorable.

In the sulfide solid electrolyte, the lower limit of a molar ratio of the content of I to the content of the halogen element X (I/X) is preferably 0.1 or more, more preferably 0.2 or more, still more preferably 0.3 or more, and may be even more preferably 0.4 or more. By setting the lower limit of the molar ratio (I/X) in this way, HICP is easily precipitated, and the ionic conductivity may be enhanced. By setting the molar ratio (I/X) to be equal to or less than the upper limit, HICP is easily precipitated, and the ionic conductivity may be enhanced. The upper limit of the molar ratio (I/X) may be, for example, 1.0 or less, 0.9 or less, 0.8 or less, or 0.7 or less.

In the sulfide solid electrolyte, the lower limit of a molar ratio of the total content of Br and I to the content of the halogen element X ((Br+I)/X) is preferably 0.5 or more, more preferably 0.6 or more, still more preferably 0.7 or more, and may be even more preferably 0.8 or more. By setting the lower limit of the molar ratio ((Br+I)/X) in this way, HICP is easily precipitated, and the ionic conductivity may be enhanced. The upper limit of the molar ratio ((Br+I)/X) may be, for example, 1.0 or less.

When the sulfide solid electrolyte contains Br and I, the lower limit of a molar ratio of Br to the total content of Br and I (Br/(Br+I)) may be greater than 0, is preferably 0.1 or more and more preferably 0.2 or more, and may be still more preferably 0.3 or more. By setting the lower limit of the molar ratio (Br/(Br+I)) in this way, HICP is easily precipitated, and the ionic conductivity may be enhanced. The upper limit of the molar ratio of (Br/(Br+I)) may be less than 1.0, 0.9 or less, 0.8 or less, or 0.7 or less. By setting the upper limit of the molar ratio (Br/(Br+I)) in this way, HICP is easily precipitated, and the ionic conductivity may be enhanced.

In the sulfide solid electrolyte, the halogen element X may not substantially contain Cl. The expression "not substantially contain Cl" means at least intentionally not containing Cl.

In the sulfide solid electrolyte, the halogen element may contain Cl, and in this case, the lower limit of a molar ratio of the content of Cl to the content of the halogen element X (Cl/X) may be greater than 0, 0.01 or more, or 0.05 or more. By setting the molar ratio (Cl/X) to be equal to or greater than the lower limit, the water resistance may become more favorable. The upper limit of the molar ratio (Cl/X) may be, for example, 0.3, 0.2, or 0.1. By setting the molar ratio (Cl/X) to be equal to or less than the upper limit, HICP is easily precipitated, and the ionic conductivity may be enhanced.

In the sulfide solid electrolyte, the halogen element X may not substantially contain F. The expression "not substantially contain F" means at least intentionally not containing F.

In the sulfide solid electrolyte, the halogen element X may contain F, and in this case, the lower limit of a molar ratio of the content of F to the content of the halogen element X (F/X) may be greater than 0, 0.01 or more, or 0.05 or more. By setting the molar ratio (F/X) to be equal to or greater than the lower limit, the water resistance may become more favorable. The upper limit of the molar ratio (F/X) may be, for example, 0.3, 0.2, or 0.1. By setting the molar ratio (F/X) to be equal to or less than the upper limit, HICP is easily precipitated, and the ionic conductivity may be enhanced.

The halogen element X in the sulfide solid electrolyte is preferably composed of only I, or only Br and I. By setting the halogen element X in the sulfide solid electrolyte to such a composition, HICP is easily precipitated, and the ionic conductivity may be enhanced.

The sulfide solid electrolyte preferably further contains Li. In the sulfide solid electrolyte, the lower limit of a molar ratio of the content of the divalent element A to the content of Li (A/Li) is preferably 0.001, more preferably 0.005, still more preferably 0.010, and even more preferably 0.018. When the molar ratio (A/Li) is equal to or greater than the lower limit, a sufficient amount of the divalent element A is contained, and the water resistance and the like tend to be further enhanced. The upper limit of the molar ratio (A/Li) is, for example, 0.5, preferably 0.3, more preferably 0.2, and still more preferably 0.1. By setting the molar ratio of (A/Li) to be equal to or less than the upper limit, the proportion of lithium ions in all cations becomes relatively high, and the ionic conductivity tends to increase. The molar ratio (A/Li) may be equal to or more than any of the above lower limits and equal to or less than any of the above upper limits.

In the sulfide solid electrolyte, the lower limit of a molar ratio of the content of the halogen element X to the content of the divalent element A (X/A) is preferably 2, and may be more preferably 3. When the molar ratio (X/A) is equal to or greater than the lower limit, a sufficient amount of the halogen element X is contained, and the ionic conductivity and the like tend to be further enhanced. When the sulfide solid electrolyte is produced, a compound A_{0.5}X can be suitably used as a raw material, and in this case, the molar ratio (X/A) in the sulfide solid electrolyte to be obtained is 2 or more. The upper limit of the molar ratio (X/A) may be, for example, 20, or 10. The molar ratio (X/A) may be equal to or more than any of the above lower limits and equal to or less than any of the above upper limits.

In general, the sulfide solid electrolyte further contains P and S. Hereinafter, a suitable content ratio of respective elements based on the content of P will be described.

In the sulfide solid electrolyte, the molar ratio of the content of the divalent element A to the content of P (A/P) is preferably 0.01 or more and 0.4 or less, more preferably 0.03 or more and 0.3 or less, and still more preferably 0.05 or more and 0.2 or less. By setting the molar ratio (A/P) to be equal to or greater than the lower limit, a sufficient amount of the divalent element A is contained, and the water resistance and the like tend to be enhanced. By setting the molar ratio of (A/P) to be equal to or less than the upper limit, the proportion of lithium ions in all cations becomes relatively high, and the ionic conductivity tends to increase.

In the sulfide solid electrolyte, the molar ratio of the content of Li to the content of P (Li/P) is preferably 1 or more and 5 or less, more preferably 2 or more and 4.5 or less, and still more preferably 2.5 or more and 4 or less. By setting the molar ratio (Li/P) to be equal to or greater than the lower limit, HICP is easily precipitated. Further, by setting the molar ratio (Li/P) to be equal to or less than the upper limit, the precipitation of Li₂S is suppressed, and, for example, the amount of hydrogen sulfide generated when exposed to an air atmosphere tends to decrease.

In the sulfide solid electrolyte, the molar ratio of the content of S to the content of P (S/P) is preferably 2 or more and 6 or less, more preferably 3 or more and 5 or less, and still more preferably 3.5 or more and 4.5 or less. By setting the molar ratio (S/P) to be in the above range, HICP is easily precipitated, and the ionic conductivity is enhanced.

In the sulfide solid electrolyte, the molar ratio of the content of the halogen element X to the content of P (X/P) is preferably 0.1 or more and 2 or less, more preferably 0.2 or more and 1.5 or less, and still more preferably 0.3 or more and 1 or less. By setting the molar ratio (X/P) to be equal to or greater than the lower limit, HICP is easily precipitated, and the ionic conductivity may be enhanced. Further, by setting the molar ratio (X/P) to be equal to or less than the upper limit, the crystal phase of lithium halide hardly remains, and the ionic conductivity may be enhanced.

The sulfide solid electrolyte may further contain another element other than the divalent element A, the halogen elements X, Li, P, and S. Examples of the another element include nitrogen, aluminum, boron, and silicon. The another element contains a divalent element other than the above divalent element A (a divalent element constituting a compound B_{0.5}X together with the halogen element X, such a divalent element and the halogen element X are a combination in which hydration energy of the compound B_{0.5}X is smaller than hydration energy of LiI, and hereinafter such a divalent element is referred to as "divalent element B"), and a halogen element other than the above halogen element X. However, the molar ratio of the content of the another element to the content of P in the sulfide solid electrolyte may be preferably, for example, less than 0.1, and more preferably less than 0.01, or the sulfide solid electrolyte may not substantially contain the another element. The molar ratio of the content of the divalent element B to the whole content of the divalent elements (the total content of the divalent element A and the divalent element B) contained in the sulfide solid electrolyte may be, for example, 0 or more and less than 0.5. The molar ratio of the content of the divalent element B is preferably 0.4 or less, more preferably 0.3 or less, and still more preferably 0.2 or less. Based on this, the disadvantage caused by the inclusion of the divalent element B can be eliminated or alleviated. In some aspects, the molar ratio of the content of the divalent element B may be 0.1 or less, or 0.05 or less (for example, 0.01 or less, typically 0.005 or less). The sulfide solid electrolyte disclosed herein can be preferably implemented in an aspect in which the sulfide solid electrolyte does not substantially contain the divalent element B. The expression "sulfide solid electrolyte does not substantially contain the divalent element B" means at least intentionally not containing the divalent element B.

Further, regarding the above another element, when a compound containing a monovalent element other than Li is used as a raw material as described above, a crystal structure of the compound containing a monovalent element used as a raw material may remain depending on the production method, resulting in degradation of the performance of a sulfide solid electrolyte to be obtained. Alternatively, when a compound containing a monovalent element is used as a raw material, the treatment time may be prolonged in order to eliminate a crystal structure of the compound containing a monovalent element. Therefore, in some cases, it may be preferable that the sulfide solid electrolyte does not use the compound containing a monovalent element other than Li as a raw material. For this reason, it tends to be preferable that the sulfide solid electrolyte does not substantially contain the monovalent element other than Li, and it tends to be preferable that the sulfide solid electrolyte does not substantially contain any alkali metal element other than Li. For example, the molar ratio of the content of the monovalent element other than Li or the alkali metal element other than Li to the content of P in the sulfide solid electrolyte may be, for example, preferably less than 0.1, more preferably less than 0.01, and still more preferably 0.

In one embodiment of the present invention, the sulfide solid electrolyte may be represented by the following formula 1.
[Chemical Formula 2]

(100 - y - z - z')[xLi₂S·(1 - x)P₂S₅]·yA_{0.5}X·zLiIz'LiX'wY . . . 1

In the above formula 1, A is the divalent element A. X is the halogen element X. X' is a halogen element other than I. Y is one or two or more kinds of elements other than Li, P, S, I, A, X, and X'. x is the number of 0.5 or more and 0.8 or less. y is the number greater than 0 and 30 or less. z is the number of 0 or more and 30 or less. z' is the number of 0 or more and 30 or less. w is the number of 0 or more and 20 or less.

The above formula 1 represents the content ratio of elements Li, P, S, I, A, X, X', and Y (composition formula), and does not specify a compound as a raw material.

Examples of the A include Mg, Ca, Sr, Ba, Mn, Cu, and Zn, and among them, Ca, Ba, Mn and Zn are preferable.

Examples of the X include F, Cl, Br, and I, and among them, I is preferable.

Examples of the X' include F, Cl, and Br.

Examples of the Y include B, N, O, Na, Al, Si, Ge, Se, Sn, Sb, and Bi, and among them, B, N, O, Al, and Si are preferable.

The x is preferably 0.6 or more and 0.78 or less, and more preferably 0.65 or more and 0.76 or less.

The y is preferably 1 or more and 30 or less, more preferably 2 or more and 25 or less, and still more preferably 3 or more and 20 or less.

The z is preferably 0 or more and 20 or less, more preferably 15 or less, and still more preferably 10 or less. The z may be preferably 10 or more.

The sum (y + z) of the y and the z is preferably 1 or more and 30 or less, more preferably 5 or more and 27 or less, and may be still more preferably 10 or more and 25 or less.

The z' is preferably 0 or more and 20 or less, more preferably 15 or less, and may be still more preferably 10 or less.

The sum (y + z + z') of the y, the z, and the z' is preferably 1 or more and 30 or less, more preferably 5 or more and 27 or less, and may be still more preferably 10 or more and 25 or less.

The w may be 0 or more and 10 or less, 0 or more and 5 or less, or 0.

When the sulfide solid electrolyte has such a composition, the ionic conductivity and the water resistance tend to become more favorable.

The ratio (z/y) of the z to the y is preferably 0 or more and 10 or less, more preferably 5 or less, and still more preferably 3 or less. In such a case, although a part derived from or related to LiI, which is easily hydrated, is sufficiently replaced with a part derived from or related to a compound A_{0.5}X, which is hardly hydrated, the water resistance tends to be further enhanced.

### (Physical properties, applications, and the like)

The lower limit of the ionic conductivity of the sulfide solid electrolyte at 25°C is preferably 0.5 mS/cm, more preferably 1 mS/cm, and still more preferably 1.5 mS/cm. When the ionic conductivity of the sulfide solid electrolyte at 25°C is equal to or greater than the lower limit, the charge-discharge performance of an energy storage element including the sulfide solid electrolyte can be further improved. The upper limit of the ionic conductivity is not particularly limited, but is, for example, 20 mS/cm, and may be 10 mS/cm.

The ionic conductivity of the sulfide solid electrolyte is determined by measuring an alternating-current impedance by the following method. Under an argon atmosphere having a dew point of -50°C or lower, 120 mg of sample powder is put into a powder molder of 10 mm in inner diameter, and then subjected to uniaxial pressing at 50 MPa or less by using a hydraulic press. After pressure release, 120 mg of SUS316L powder as a current collector is put on an upper surface of the sample, and then subjected to uniaxial pressing at 50 MPa or less by using the hydraulic press again. Next, 120 mg of SUS316L powder as a current collector is put on a lower surface of the sample, and then subjected to uniaxial pressing at 360 MPa for 5 minutes to obtain a pellet for ionic conductivity measurement. This pellet for ionic conductivity measurement is inserted into an HS cell from Hohsen Corp. to measure an alternating-current impedance at a predetermined temperature. The measurement conditions are an applied voltage amplitude of 20 mV, a frequency range of 1 MHz to 100 mHz, and a measurement temperature of 25°C.

The upper limit of activation energy of the ionic conductivity of the sulfide solid electrolyte is preferably 0.34 eV, more preferably 0.33 eV, and still more preferably 0.32 eV. When the activation energy of the ionic conductivity of the sulfide solid electrolyte is equal to or less than the upper limit, the ionic conductivity of the sulfide solid electrolyte becomes favorable in a temperature range from high temperature to low temperature. The lower limit of the activation energy may be, for example, 0.20 eV, or 0.25 eV.

The activation energy of the ionic conductivity of the sulfide solid electrolyte is determined by the following method. The alternating-current impedance at each measurement temperature is measured in the same manner as in the method in the ionic conductivity except that the measurement temperature is changed to -30°C, -20°C, -10°C, 0°C, and 25°C. The ionic conductivity at each measurement temperature is determined from the measurement results, and the activation energy of the ionic conductivity is calculated from the slope of the straight line of Arrhenius plot of the ionic conductivity against the reciprocal of the temperature.

The shape of the sulfide solid electrolyte is not particularly limited, and is usually granular, massive, or the like. The sulfide solid electrolyte can be suitably used as an electrolyte of an energy storage element such as a lithium ion secondary battery, particularly a lithium ion energy storage element. Among them, the sulfide solid electrolyte can be particularly suitably used as an electrolyte of an all-solid-state battery. The sulfide solid electrolyte can be used for any of a positive electrode layer, an isolation layer, a negative electrode layer and the like in the energy storage element.

### <Method for Selecting Element for Sulfide Solid Electrolyte>

The method for selecting elements for a sulfide solid electrolyte according to one embodiment of the present invention includes selecting a divalent element A and a halogen element X in a sulfide solid electrolyte containing one or two or more kinds of the divalent elements A and one or two or more kinds of the halogen elements X, and in the selecting, a combination in which hydration energy of a compound A_{0.5}X composed of the divalent element A and the halogen element X is greater than hydration energy of LiI, determined by first-principle calculation is selected.

The first principle calculation is a calculation method of predicting properties in a non-empirical manner, which is an approach that is capable of calculating the total energy of a model including atoms with known atomic numbers and spatial coordinates, and the energy band structure of electrons. The calculation method includes two roughly classified types of "wave function theory" system and "density functional theory" system. The calculation method used in the specification of the present application is based on the density functional theory.

In the first principle calculation, for example, calculation software of Vienna Ab-initio Simulation Package (VASP) can be used. Calculation conditions are as follows. The k point is set such that the k-resolution value is 1000 ± 200. The k-resolution is the product of the number of atoms in a unit cell and the k points in a, b, and c-axis directions. When the substance to be calculated contains a transition metal element (the 3d orbitals are not closed shells in the states of cations with valences considered stable, and electrons are present in the 3d orbitals), a Hubbard Ueff value is set. The Hubbard Ueff value uses a value registered in the crystalline structure database "Materials Project" (https://materialsproject.org/#search/materials).
Cut-off energy of plane wave basis function: 520 eV
Approximation of exchange-correlation interaction: GGA + U
Pseudopotential: PAW (PBEsol)
k point: k-resolution = 1000 ± 200
Energy smearing: Gaussian method

The calculation results shown in Table 3 and the like, which will be described later, are based on the above conditions using the calculation software described above.

As a method for calculating the hydration energy by first-principle calculation, the procedures for calculating "the amount of change in the total energy due to hydration reaction" (hydration energy) will be described in detail below.

LiI + H₂O → LiI ·H₂O ··· i

A_{0.5}X + H₂O → A_{0.5}X ·H₂O ··· ii

(A= Mg, Ca, Sr, Ba, Mn, Cu, or Zn, and X = F, Cl, Br, or I)

The amount of change in the total energy due to hydration reaction based on the above formula i or ii is determined according to the following procedures (1) to (4). That is, the amount of change in the total energy is obtained when hydration reaction occurs between a halide (LiI or A_{0.5}X) and water at a molar ratio of 1 : 1, and the obtained amount of change is determined as the hydration energy.

### (1) Calculation of total energy of halide (LiI or A_{0.5}X)

The total energy of the halide in a solid state is calculated by first-principle calculation. As for the crystal structure of the halide, a crystal structure with the ID number listed in Table 1, which is registered in the crystalline structure database "Materials Project" (httpsV/materialsproject.org/#search/materials), is used.

**[Table 1]**

| Halide | | Crystal structure (ID number registered in Materials Project) |
|---|---|---|
| No. | Composition | |
| - | LiI | mp-568273 |
| 1 | Mg_{0.5}F | mp-1249 |
| 2 | Mg_{0.5}Cl | mp-23210 |
| 3 | Mg_{0.5}Br | mp-30034 |
| 4 | Mg_{0.5}I | mp-23210 |
| 5 | Ca_{0.5}F | mp-2741 |
| 6 | Ca_{0.5}Cl | mp-571642 |
| 7 | Ca_{0.5}Br | mp-22888 |
| 8 | Ca_{0.5}I | mp-23210 |
| 9 | Sr_{0.5}F | mp-981 |
| 10 | Sr_{0.5}Cl | mp-23209 |
| 11 | Sr_{0.5}Br | mp-32711 |
| 12 | Sr_{0.5}I | mp-23181 |
| 13 | Ba_{0.5}F | mp-1029 |
| 14 | Ba_{0.5}Cl | mp-568662 |
| 15 | Ba_{0.5}Br | mp-568536 |
| 16 | Ba_{0.5}I | mp-568536 |
| 17 | Mn_{0.5}F | mp-556585 |
| 18 | Mn_{0.5}Cl | mp-28233 |
| 19 | Mn_{0.5}Br | mp-571084 |
| 20 | Mn_{0.5}I | mp-28013 |
| 21 | Cu_{0.5}F | mp-1229 |
| 22 | Cu_{0.5}Cl | mp-1238872 |
| 23 | Cu_{0.5}Br | mp-23219 |
| 24 | Cu_{0.5}I | mp-1147667 |
| 25 | Zn_{0.5}F | mp-1873 |
| 26 | Zn_{0.5}Cl | mp-647579 |
| 27 | Zn_{0.5}Br | mp-647579 |
| 28 | Zn_{0.5}I | mp-22909 |
| 29 | KF | mp-463 |
| 30 | KCl | mp-23193 |
| 31 | KBr | mp-23251 |
| 32 | KI | mp-22898 |

### (2) Calculation of total energy of water

Similarly, the total energy of water in a solid state is calculated by first-principle calculation. As for the crystal structure of the water, a crystal structure (ID number: mp-697111) registered in "Materials Project" is used.

### (3) Calculation of total energy of hydrate (LiI ·H₂O or A_{0.5}X ·H₂O)

Similarly, the total energy of a hydrate in a solid state is calculated by first-principle calculation. As for the crystal structure of the hydrate, a crystal structure with the ID number listed in Table 2, which is registered in "Materials Project", is used.

**[Table 2]**

| Hydrate | | Crystal structure (ID number registered in Materials Project) |
|---|---|---|
| No. | Composition | |
| - | LiI·H₂O | mp-1180504 |
| 1 | Mg_{0.5}F·H₂O | mp-24336 |
| 2 | Mg_{0.5}Cl·H₂O | mp-24336 |
| 3 | Mg_{0.5}Br·H₂O | mp-24336 |
| 4 | Mg_{0.5}I·H₂O | mp-24336 |
| 5 | Ca_{0.5}F·H₂O | mp-24336 |
| 6 | Ca_{0.5}Cl·H₂O | mp-24090 |
| 7 | Ca_{0.5}Br·H₂O | mp-24336 |
| 8 | Ca_{0.5}I·H₂O | mp-24336 |
| 9 | Sr_{0.5}F·H₂O | mp-24090 |
| 10 | Sr_{0.5}Cl·H₂O | mp-24090 |
| 11 | Sr_{0.5}Br·H₂O | mp-24090 |
| 12 | Sr_{0.5}I·H₂O | mp-24090 |
| 13 | Ba_{0.5}F·H₂O | mp-24090 |
| 14 | Ba_{0.5}Cl·H₂O | mp-24090 |
| 15 | Ba_{0.5}Br·H₂O | mp-24090 |
| 16 | Ba_{0.5}I·H₂O | mp-24090 |
| 17 | Mn_{0.5}F·H₂O | mp-24336 |
| 18 | Mn_{0.5}Cl·H₂O | mp-24336 |
| 19 | Mn_{0.5}Br·H₂O | mp-24336 |
| 20 | Mn_{0.5}I·H₂O | mp-24336 |
| 21 | Cu_{0.5}F·H₂O | mp-24090 |
| 22 | Cu_{0.5}Cl·H₂O | mp-24090 |
| 23 | Cu_{0.5}Br·H₂O | mp-24090 |
| 24 | Cu_{0.5}I·H₂O | mp-24336 |
| 25 | Zn_{0.5}F·H₂O | mp-24336 |
| 26 | Zn_{0.5}Cl·H₂O | mp-24336 |
| 27 | Zn_{0.5}Br·H₂O | mp-24336 |
| 28 | Zn_{0.5}I·H₂O | mp-24336 |
| 29 | KF·H₂O | mp-754153 |
| 30 | KCl·H₂O | mp-754153 |
| 31 | KBr·H₂O | mp-754153 |
| 32 | KI·H₂O | mp-1180504 |

### (4) Calculation of hydration energy

The amount of change in the total energy due to hydration reaction, that is, hydration energy is determined from the difference between the sum of the total energies of a halide and water calculated in (1) and (2) above and the total energy of a hydrate calculated in (3) above. The calculation results are shown in Table 3.

**[Table 3]**

| Halide | | Change in the total energy due to hydration reaction [meV/atom] |
|---|---|---|
| No. | Composition | |
| - | LiI | -11.5 |
| 1 | Mg_{0.5}F | 41.4 |
| 2 | Mg_{0.5}Cl | -12.8 |
| 3 | Mg_{0.5}Br | -13.8 |
| 4 | Mg_{0.5}I | -17.2 |
| 5 | Ca_{0.5}F | 65.6 |
| 6 | Ca_{0.5}Cl | 5.6 |
| 7 | Ca_{0.5}Br | 3.5 |
| 8 | Ca_{0.5}I | 9.3 |
| 9 | Sr_{0.5}F | 62.0 |
| 10 | Sr_{0.5}Cl | 21.4 |
| 11 | Sr_{0.5}Br | 6.0 |
| 12 | Sr_{0.5}I | -2.0 |
| 13 | Ba_{0.5}F | 55.3 |
| 14 | Ba_{0.5}Cl | 25.2 |
| 15 | Ba_{0.5}Br | 14.0 |
| 16 | Ba_{0.5}I | 5.9 |
| 17 | Mn_{0.5}F | 24.1 |
| 18 | Mn_{0.5}Cl | 18.6 |
| 19 | Mn_{0.5}Br | 24.2 |
| 20 | Mn_{0.5}I | 34.1 |
| 21 | Cu_{0.5}F | -17.8 |
| 22 | Cu_{0.5}Cl | 51.7 |
| 23 | Cu_{0.5}Br | 87.0 |
| 24 | Cu_{0.5}I | 42.1 |
| 25 | Zn_{0.5}F | 11.7 |
| 26 | Zn_{0.5}Cl | 41.1 |
| 27 | Zn_{0.5}Br | 58.6 |
| 28 | Zn_{0.5}I | 88.8 |
| 29 | KF | 10.4 |
| 30 | KCl | 38.3 |
| 31 | KBr | 41.8 |
| 32 | KI | 47.9 |

The amount of change in the total energy due to hydration reaction of halides of Nos. 1, 5 to 20, and 22 to 28 listed in Table 3 (hydration energy of each halide) is greater than the amount of change in the energy due to hydration reaction of LiI (hydration energy of LiI).

The hydration energy of a halide of an alkali metal other than LiI can also be determined by the same procedures as in LiI described above. Tables 1 to 3 also show examples of potassium halides as Nos. 29 to 32.

A sulfide solid electrolyte (β), which has diffraction peaks in a range of 19.9° ± 0.5° and a range of 23.6° ± 0.5° in an X-ray diffraction diagram using a CuKα ray and contains one or two or more kinds of divalent elements A and one or two or more kinds of halogen elements X selected by the method for selecting elements, is also one embodiment of the present invention. The specific form and suitable form of such a sulfide solid electrolyte (β) are the same as those of the sulfide solid electrolyte described above as the "sulfide solid electrolyte according to one embodiment of the present invention".

### <Method for Producing Sulfide Solid Electrolyte>

The method for producing a sulfide solid electrolyte according to one embodiment of the present invention includes treating a composition containing one or two or more kinds of divalent elements A and one or two or more kinds of halogen elements X, selected by the method for selecting elements according to one embodiment of the present invention. The method for producing a sulfide solid electrolyte according to another embodiment of the present invention includes treating a composition containing one or two or more kinds of divalent elements A and one or two or more kinds of halogen elements X, in which the divalent element A and the halogen element X are a combination in which hydration energy of a compound A_{0.5}X composed of the divalent element A and the halogen element X is greater than hydration energy of LiI.

### (Composition)

The composition used as a raw material in the production method usually contains Li, P, and S in addition to the divalent element A and the halogen element X. The composition is usually a mixture of two or more kinds of compounds and the like containing at least one kind of elements of Li, P, S, a divalent element A, and a halogen element X. It is sufficient if any of the compounds and the like contained in the composition (mixture) contains Li, P, S, a divalent element A, and a halogen element X. Two or more kinds of elements of Li, P, S, a divalent element A, and a halogen element X may be contained in one compound. For example, Li₂S to be described later as a compound containing Li and S, P₂S₅ to be described later as a compound containing P and S, and a halide (A_{0.5}X) of a divalent element A to be described later as a compound containing a divalent element A and a halogen element X are mentioned. The composition may contain a compound and the like that do not contain any of the elements of Li, P, S, a divalent element A, and a halogen element X. The composition may contain a compound A_{0.5}X, or may not contain a compound A_{0.5}X.

Examples of the compound and the like containing Li include Li₂S, Li₂O, LisN, Li₂CO₃, and metallic lithium. In addition, examples of the compound and the like containing Li may include a lithium halide to be described later. Among them, Li₂S is preferable. The compound and the like containing Li may be used singly alone, or two or more kinds thereof in mixture.

Examples of the compound and the like containing P include P₂S₃, P₂S₅, P₂O₅, P₃N₅, and elemental phosphorus. Among them, P₂S₃ and P₂S₅ are preferable, and P₂S₅ is more preferable. The compound and the like containing P may be used singly alone, or two or more kinds thereof in mixture.

Examples of the compound and the like containing S include Li₂S, P₂S₃, P₂S₅, Al₂S₃, MgS, SiS₂, and elemental sulfur. Among them, Li₂S, P₂S₃, and P₂S₅ are preferable, and Li₂S, and P₂S₅ are more preferable. The compound and the like containing S may be used singly alone, or two or more kinds thereof in mixture.

Examples of the compound and the like containing a divalent element A include a halide (A_{0.5}X), an oxide, and a nitride of a divalent element A, and among them, a halide is preferable. Examples of the halide (A_{0.5}X) of a divalent element A include halides of Nos. 1, 5 to 20, and 22 to 28 listed in Table 3. The compound and the like containing a divalent element A may be used singly alone, or two or more kinds thereof in mixture.

Examples of the compound and the like containing a halogen include LiF, LiCl, LiBr, LiI, MgCl₂, MgBr₂, MgI₂, Br₂, and I₂ in addition to the above halide (A_{0.5}X) of a divalent element A. Among them, a halide of a divalent element A, and LiI are preferable, and a halide of a divalent element A may be more preferable. As the compound and the like containing a halogen, a compound containing no lithium halide may be preferable. The compound and the like containing a halogen may be used singly alone, or two or more kinds thereof in mixture.

For example, as one embodiment, the composition may be a composition containing Li₂S, P₂S₅, and A_{0.5}X, or a composition containing Li₂S, P₂S₅, A_{0.5}X, and LiI.

In the composition, the molar ratio of the content of A_{0.5}X to the total content of A_{0.5}X and LiI is preferably 0.01 or more and 1 or less, more preferably 0.1 or more, and still more preferably 0.3 or more. In such a case, a sulfide solid electrolyte, in which LiI that is easily hydrated is sufficiently replaced with A_{0.5}X, is easily obtained.

The specific content and suitable content of each element in the composition are the same as the specific content and suitable content of each element in the sulfide solid electrolyte according to one embodiment of the present invention described above.

### (Treatment step)

In the production method, the composition is treated to obtain a sulfide solid electrolyte. As the treatment, a method in which an intermediate is obtained by mechanical milling or the like and the obtained intermediate is heated, or the like can be mentioned. The means for obtaining an intermediate is not limited to the above mechanical milling or the like, and the intermediate may be obtained by a method other than the mechanical milling, for example, a melt quenching method.

The mechanical milling may be either dry or wet, but is preferably wet mechanical milling because a compound and the like of raw materials can be mixed more uniformly. Examples of the mechanical milling include a case-driven mill, a medium stirring mill, milling with a high-speed rotary crusher or the like, a roller mill, and a jet mill. Examples of the case-driven mill include a rotary mill, a vibration mill, and a planetary mill. Examples of the medium stirring mill include an attritor, and a bead mill. Examples of the milling with a high-speed rotary crusher include a hammer mill, and a pin mill. Among them, a case-driven mill is preferable, and a planetary mill is particularly preferable.

The intermediate obtained through mechanical milling or the like may have a crystal structure, but is preferably a so-called sulfide glass. The term "sulfide glass" means a sulfide solid electrolyte containing an amorphous structure. When the intermediate is sulfide glass, a sulfide solid electrolyte in which a crystal phase with low stability such as Li₂S is less and elements are highly dispersed can be obtained.

The intermediate obtained by mechanical milling or the like is subjected to heating (heat treatment). As a result, a sulfide solid electrolyte in which at least a part of the intermediate is crystallized into HICP is obtained. The heating (heat treatment) may be performed under a reduced pressure atmosphere or an inert gas atmosphere. The heating temperature range is, for example, preferably 150°C or more and less than 260°C, more preferably 160°C or more and 255°C or less, and still more preferably 170°C or more and 250°C or less. By setting the heating temperature to be equal to or greater than the lower limit, the crystallization sufficiently proceeds, and a sulfide solid electrolyte with sufficiently high ionic conductivity is obtained. By setting the heating temperature to be equal to or less than the upper limit, the precipitation of LICP is suppressed, and a sulfide solid electrolyte with higher ionic conductivity is obtained.

### <Energy Storage Element>

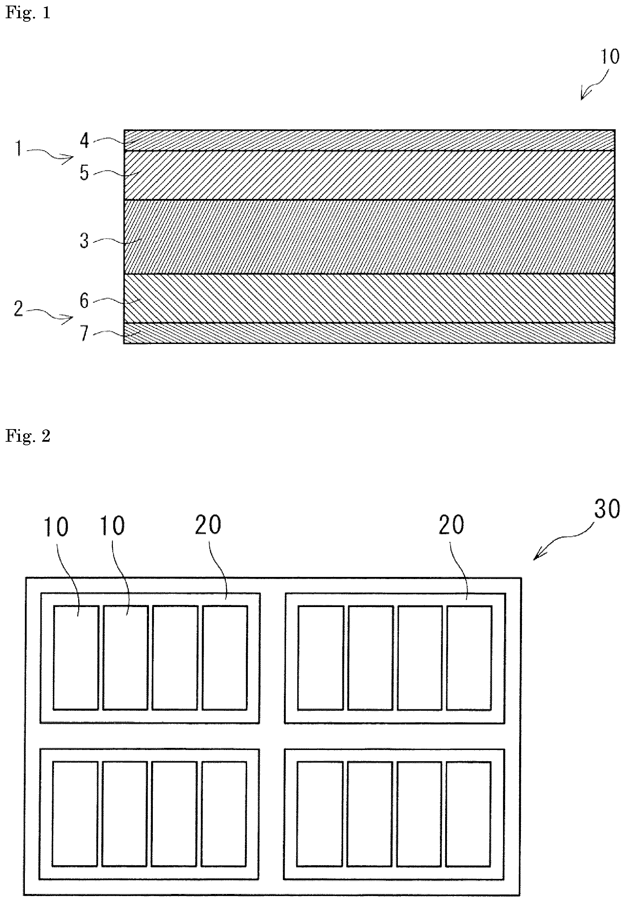

Hereinafter, an energy storage element will be described with reference to an all-solid-state battery as a specific example, as one embodiment of the energy storage element of the present invention. An energy storage element 10 shown in Fig. 1 is an all-solid-state battery, and is a secondary battery in which a positive electrode layer 1 and a negative electrode layer 2 are arranged with an isolation layer 3 interposed therebetween. The positive electrode layer 1 includes a positive electrode substrate 4 and a positive active material layer 5, and the positive electrode substrate 4 is an outermost layer of the positive electrode layer 1. The negative electrode layer 2 includes a negative electrode substrate 7 and a negative active material layer 6, and the negative electrode substrate 7 is an outermost layer of the negative electrode layer 2. In the energy storage element 10 shown in Fig. 1, the negative active material layer 6, the isolation layer 3, the positive active material layer 5, and the positive electrode substrate 4 are stacked in this order on the negative electrode substrate 7.

The energy storage element 10 contains the sulfide solid electrolyte according to one embodiment of the present invention in at least one of the positive electrode layer 1, the negative electrode layer 2, and the isolation layer 3. More specifically, the sulfide solid electrolyte according to one embodiment of the present invention is contained in at least one of the positive active material layer 5, the negative active material layer 6, and the isolation layer 3. The energy storage element 10 contains a sulfide solid electrolyte having favorable water resistance, and thus the reaction of the sulfide solid electrolyte with water is suppressed even when the energy storage element 10 is exposed to an air atmosphere during the production process, and favorable charge-discharge performance can be exhibited.

The energy storage element 10 may also use another solid electrolyte other than the sulfide solid electrolyte according to one embodiment of the present invention. Examples of the another solid electrolyte include a sulfide solid electrolyte, an oxide solid electrolyte, a dry polymer electrolyte, a gel polymer electrolyte, and a pseudo solid electrolyte other than the sulfide solid electrolyte according to one embodiment of the present invention, and among them, a sulfide solid electrolyte is preferable. In addition, multiple different kinds of solid electrolytes may be contained in one layer in the energy storage element 10, or a solid electrolyte that is different for each of the layers may be contained in each layer.

Examples of the sulfide solid electrolyte other than the sulfide solid electrolyte according to one embodiment of the present invention include Li₂S-P₂S₅, Li₂S-P₂S₅-LiI, Li₂S-P₂S₅-LiCl, Li₂S-P₂S₅-LiBr, Li₂S-P₂S₅-Li₂O, Li₂S-P₂S₅-Li₂O-LiI, Li₂S-P₂S₅-Li₃N, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘS₂ₙ (provided that m and n are positive numbers, and Z is any of Ge, Zn, and Ga), Li₂S-GeS₂, Li₂S-SiS₂-Li₃PO₄, Li₂S-SiS₂-LiₓMO_{y} (provided that x and y are positive numbers, and M is any of P, Si, Ge, B, Al, Ga, and In), and Li₁₀GeP₂S₁₂.

### [Positive electrode layer]

The positive electrode layer 1 includes a positive electrode substrate 4, and a positive active material layer 5 stacked on a surface of the positive electrode substrate 4. The positive electrode layer 1 may have an intermediate layer between the positive electrode substrate 4 and the positive active material layer 5. The intermediate layer can be, for example, a layer containing a conductive agent, and a binder.

### (Positive electrode substrate)

The positive electrode substrate 4 has conductivity. Whether or not the positive electrode substrate exhibits the "conductivity" is determined by using a volume resistivity of 10⁷ Ω·m measured in accordance with JIS-H-0505 (1975) as the threshold. As the material of the positive electrode substrate 4, a metal such as aluminum, titanium, tantalum, indium, or stainless steel, or an alloy thereof is used. Among them, aluminum or an aluminum alloy is preferable from the viewpoint of electric potential resistance, high conductivity, and costs. Examples of the positive electrode substrate 4 include a foil, and a deposited film, and among them, a foil is preferable from the viewpoint of costs. Accordingly, the positive electrode substrate 4 is preferably an aluminum foil, or an aluminum alloy foil. Examples of the aluminum or aluminum alloy include A1085P and A3003P specified in JIS-H-4000 (2014).

The average thickness of the positive electrode substrate 4 is preferably 3 µm or more and 50 µm or less, more preferably 5 µm or more and 40 µm or less, still more preferably 8 µm or more and 30 µm or less, and particularly preferably 10 µm or more and 25 µm or less. By setting the average thickness of the positive electrode substrate 4 within the above-described range, the energy density per volume of an energy storage element 10 can be increased while increasing the strength of the positive electrode substrate 4. The term "average thickness" of the positive electrode substrate 4 and the negative electrode substrate 7 to be described later refers to a value obtained by dividing the mass of a substrate having a predetermined area by the true density and area of the substrate.

The intermediate layer is a layer arranged between the positive electrode substrate 4 and the positive active material layer 5. The intermediate layer contains a conductive agent such as carbon particles to reduce contact resistance between the positive electrode substrate 4 and the positive active material layer 5. The configuration of the intermediate layer is not particularly limited, and contains, for example, a binder and a conductive agent.

### (Positive active material layer)

The positive active material layer 5 contains a positive active material. The positive active material layer 5 can be formed of a so-called positive composite containing a positive active material. The positive active material layer 5 may contain a mixture or composite containing a positive active material and a solid electrolyte. The positive active material layer 5 may contain optional components such as a conductive agent, a binder (binding agent), a thickener, a filler, and the like as needed. One or two or more kinds of these optional components may not be substantially contained in the positive active material layer 5.

The positive active material contained in the positive active material layer 5 can be appropriately selected from known positive active materials that are usually used for a lithium ion secondary battery and an all-solid-state battery. As the positive active material, a material capable of occluding and releasing lithium ions is usually used. Examples of the positive active material include a lithium transition metal composite oxide having an α-NaFeO₂-type crystal structure, a lithium transition metal composite oxide having a spinel-type crystal structure, a polyanion compound, a chalcogenide, and sulfur. Examples of the lithium transition metal composite oxide having an α-NaFeO₂-type crystal structure include Li[LiₓNi₁₋ₓ]O₂ (0 ≤ x < 0.5), Li[LiₓNi_{γ}Co_{(1-x-γ)}]O₂ (0 ≤ x < 0.5, 0 < y < 1), and Li[LiₓNi_{γ}Mn_{β}Co_{(1-x-γ-β}]O₂ (0 ≤ x < 0.5, 0 < y, 0 < β, 0.5 < y+6 < 1). Examples of the lithium-transition metal composite oxide having a spinel-type crystal structure include LiₓMn₂O₄, and LiₓNi_{γ}Mn_{(2-γ)}O₄. Examples of the polyanion compound include LiFePO₄, LiMnPO₄, LiNiPO₄, LiCoPO₄, Li₃V₂(PO₄)₃, Li₂MnSiO₄, and Li₂CoPO₄F. Examples of the chalcogenide include titanium disulfide, molybdenum disulfide, and molybdenum dioxide. Apart of atoms or polyanions in these materials may be replaced with atoms or anion species composed of other elements. A surface of the positive active material may be coated with an oxide such as lithium niobate, lithium titanate, or lithium phosphate. In the positive active material layer, these positive active materials may be used singly alone, or two or more kinds thereof in mixture.

The positive active material is usually particles (powder). The average particle size of the positive active material is, for example, preferably 0.1 µm or more and 20 µm or less. By setting the average particle size of the positive active material to be equal to or greater than the lower limit, the positive active material is easily produced or handled. By setting the average particle size of the positive active material to be equal to or less than the upper limit, the electron conductivity of the positive active material layer 5 is improved. In this regard, the term "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

A crusher, a classifier, and the like are used to obtain the particles in a predetermined shape. As the crushing method, for example, a method using a mortar, a ball mill, a sand mill, a vibratory ball mill, a planetary ball mill, a jet mill, a counter jet mill, a whirling airflow-type jet mill, a sieve, or the like is mentioned. At the time of crushing, wet crushing under the coexistence of water or an organic solvent such as hexane can also be used. As for the classification method, a sieve, a wind classifier and the like are used in both of dry and wet classifications as needed.

The content of the positive electrode active material in the positive active material layer 5 is preferably 10% by mass or more and 95% by mass or less, more preferably 30% by mass or more, and still more preferably 50% by mass or more. By setting the content of the positive active material within the above range, the electric capacity of an energy storage element 10 can be further increased.

When the positive active material layer 5 contains a solid electrolyte, the content of the solid electrolyte is preferably 5% by mass or more and 90% by mass or less, more preferably 20% by mass or more and 70% by mass or less, and may be still more preferably 50% by mass or less. By setting the content of the solid electrolyte within the above range, the electric capacity of an energy storage element 10 can be further increased. When the sulfide solid electrolyte according to one embodiment of the present invention is used for the positive active material layer 5, the content of the sulfide solid electrolyte according to one embodiment of the present invention in an all-solid electrolyte in the positive active material layer 5 is preferably 50% by mass or more, more preferably 70 by mass or more%, still more preferably 90% by mass or more, and even more preferably substantially 100% by mass.

The mixture of the positive active material and the solid electrolyte is a mixture prepared by mixing the positive active material, the solid electrolyte, and the like by mechanical milling or the like. For example, the mixture of the positive active material, the solid electrolyte, and the like can be obtained by mixing a particulate positive active material, a particulate solid electrolyte, and the like. Examples of the composite of the positive active material, the solid electrolyte, and the like include a composite having a chemical or physical bond between the positive active material, the solid electrolyte, and the like, and a composite formed by mechanically combining the positive active material, the solid electrolyte, and the like. The composite has the positive active material, the solid electrolyte, and the like present in one particle, and examples the composite include a composite in which the positive active material, the solid electrolyte, and the like form an aggregation state, and a composite in which a film containing the solid electrolyte or the like is formed on at least a part of a surface of the positive active material.

The conductive agent is not particularly limited as long as it is a material exhibiting conductivity. Examples of such a conductive agent include a carbonaceous material, a metal, and conductive ceramics. Examples of the carbonaceous material include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the shape of the conductive agent include a powdery shape, and a fibrous shape. As the conductive agent, these materials may be used singly alone, or two or more kinds thereof in mixture. These materials may be combined before use. For example, a material formed by combining carbon black with CNT may be used. Among them, carbon black is preferable from the viewpoint of electron conductivity and coatability, and in particular, acetylene black is preferable.

The content of the conductive agent in the positive active material layer 5 is preferably 1% by mass or more and 10% by mass or less, and more preferably 3% by mass or more and 9% by mass or less. By setting the content of the conductive agent within the above range, the electric capacity of an energy storage element 10 can be increased.

Examples of the binder include thermoplastic resins such as fluororesin (polytetrafluoroethylene (PTFE), polyvinylidene fluoride (PVDF), etc.), polyethylene, polypropylene, and polyimide; elastomers such as ethylene-propylene-diene rubber (EPDM), sulfonated EPDM, styrenebutadiene rubber (SBR), and fluororubber; and a polysaccharide polymer.

The content of the binder in the positive active material layer 5 is preferably 1% by mass or more and 10% by mass, and more preferably 3% by mass or more and 9% by mass or less. By setting the content of the binder in the above range, the positive active material can be stably kept.

Examples of the thickener include polysaccharide polymers such as carboxymethylcellulose (CMC), and methylcellulose. When the thickener has a functional group that is reactive with lithium or the like, the functional group may be deactivated by methylation or the like in advance.

The filler is not particularly limited. Examples of the filler include polyolefins such as polypropylene, and polyethylene; inorganic oxides such as silicon dioxide, aluminum oxide, titanium dioxide, calcium oxide, strontium oxide, barium oxide, magnesium oxide, and aluminosilicate; hydroxides such as magnesium hydroxide, calcium hydroxide, and aluminum hydroxide; a carbonate such as calcium carbonate; hardly soluble ionic crystals of calcium fluoride, barium fluoride, barium sulfate, and the like; nitrides such as aluminum nitride, and silicon nitride; and substances derived from mineral resources such as talc, montmorillonite, boehmite, zeolite, apatite, kaolin, mullite, spinel, olivine, sericite, bentonite, and mica; and artificial products thereof.

The positive active material layer 5 may contain a typical nonmetal element such as B, N, P, F, Cl, Br, or I; a typical metal element such as Li, Na, Mg, Al, K, Ca, Zn, Ga, Ge, Sn, Sr, or Ba, or a transition metal element such as Sc, Ti, V, Cr, Mn, Fe, Co, Ni, Cu, Mo, Zr, Nb, or W as a component other than the positive active material, the conductive agent, the binder, the thickener, and the filler.

An average thickness of the positive active material layer 5 is preferably 30 µm or more and 1,000 µm or less, and more preferably 60 µm or more and 500 µm or less. By setting the average thickness of the positive active material layer 5 to be equal to or greater than the lower limit, an energy storage element 10 having a high energy density can be obtained. By setting the average thickness of the positive active material layer 5 to be equal to or less than the upper limit, the size of an energy storage element 10 can be reduced. The value of the average thickness of the positive active material layer 5 is a value of average thickness of any five points measured in the positive active material layer 5. The same applies to the values of the average thicknesses of the negative active material layer 6 and isolation layer 3 to be described later.

### [Negative electrode layer]

The negative electrode layer 2 includes a negative electrode substrate 7, and a negative active material layer 6 placed on the negative electrode substrate 7 directly or with an intermediate layer interposed therebetween. The configuration of the intermediate layer is not particularly limited, and can be selected from, for example, the configurations mentioned for the positive electrode layer 1.

### (Negative electrode substrate)

The negative electrode substrate 7 has conductivity. As the material of the negative electrode substrate 7, a metal such as copper, nickel, stainless steel, nickel-plated steel, or aluminum, or an alloy thereof is used. Among them, copper or a copper alloy is preferable. Examples of the negative electrode substrate include a foil, and a vapor deposited film, and among them, a foil is preferable from the viewpoint of costs. Therefore, the negative electrode substrate is preferably a copper foil, or a copper alloy foil. Examples of the copper foil include a rolled copper foil, and an electrolytic copper foil.

The average thickness of the negative electrode substrate 7 is preferably 2 µm or more and 35 µm or less, more preferably 3 µm or more and 30 µm or less, still more preferably 4 µm or more and 25 µm or less, and particularly preferably 5 µm or more and 20 µm or less. By setting the average thickness of the negative electrode substrate 7 to be equal to or greater than the lower limit, the strength of the negative electrode substrate 7 can be increased. By setting the average thickness of the negative electrode substrate 7 to be equal to or less than the upper limit, the energy density per volume of an energy storage element 10 can be increased.

### (Negative active material layer)

The negative active material layer 6 contains a negative active material. The negative active material layer 6 can be formed of a so-called negative composite containing a negative active material. The negative active material layer 6 may contain a mixture or composite containing a negative active material and a solid electrolyte. The negative active material layer 6 contains optional components such as a conductive agent, a binder, a thickener, a filler, and the like as needed. The kinds and suitable contents of the optional components in the negative active material layer 6 are the same as those of the optional components in the positive active material layer 5 described above. One or two or more kinds of these optional components may not be substantially contained in the negative active material layer 6.

The negative active material layer 6 may contain a typical nonmetal element such as B, N, P, F, Cl, Br, or I, a typical metal element such as Li, Na, Mg, Al, K, Ca, Zn, Ga, Ge, Sn, Sr, or Ba, or a transition metal element such as Sc, Ti, V, Cr, Mn, Fe, Co, Ni, Cu, Mo, Zr, Ta, Hf, Nb, or W as a component other than the negative active material, the conductive agent, the binder, the thickener, and the filler.

The negative active material can be appropriately selected from known negative active materials that are usually used for a lithium ion secondary battery and an all-solid-state battery. As the negative active material, a material capable of occluding and releasing lithium ions is usually used. Examples of the negative active material include metallic Li; metals or metalloids such as Si and Sn; metal oxides or metalloid oxides such as an Si oxide, a Ti oxide, and an Sn oxide; titanium-containing oxides such as Li₄Ti₅O₁₂, LiTiO₂, and TiNb₂O₇; a polyphosphoric acid compound; silicon carbide; and carbon materials such as graphite and non-graphitic carbon (easily graphitizable carbon or hardly graphitizable carbon). Among these materials, graphite, and non-graphitic carbon are preferable. In the negative active material layer 6, these materials may be used singly alone, or two or more kinds thereof in mixture.

The term "graphite" refers to a carbon material in which an average lattice spacing (d₀₀₂) of a (002) plane determined by X-ray diffraction before charge-discharge or in a discharge state is 0.33 nm or more and less than 0.34 nm. Examples of the graphite include natural graphite, and artificial graphite. Among them, artificial graphite is preferable from the viewpoint of being capable of obtaining a material having stable physical properties.

The term "non-graphitic carbon" refers to a carbon material in which the average lattice spacing (d₀₀₂) of a (002) plane determined by X-ray diffraction before charge-discharge or in the discharge state is 0.34 nm or more and 0.42 nm or less. Examples of the non-graphitic carbon include hardly graphitizable carbon, and easily graphitizable carbon. Examples of the non-graphitic carbon include a material derived from resin, a material derived from petroleum pitch, and a material derived from alcohol.

In this regard, the term "discharge state" means a state discharged such that lithium ions that can be occluded and released in association with charge-discharge are sufficiently released from a carbon material that is a negative active material. For example, the term "discharge state" refers to a state where an open circuit voltage is 0.7 V or more in a monopolar battery in which a negative electrode containing a carbon material as a negative active material is used as a working electrode and metallic Li is used as a counter electrode. Potential of the metallic Li counter electrode in an open circuit state is substantially equal to the oxidation/reduction potential of Li, and thus, the open circuit voltage in the monopolar battery is substantially equal to the potential of the negative electrode containing a carbon material to the oxidation/reduction potential of Li.

The term "hardly graphitizable carbon" refers to a carbon material in which the d₀₀₂ is 0.36 nm or more and 0.42 nm or less.

The term "easily graphitizable carbon" refers to a carbon material in which the d₀₀₂ is 0.34 nm or more and less than 0.36 nm.

The negative active material is usually particles (powder). The average particle size of the negative active material can be, for example, 1 nm or more and 100 µm or less. When the negative active material is, for example, a carbon material, the average particle size thereof may be preferably 1 µm or more and 100 µm or less. When the negative active material is a metal, a metalloid, a metal oxide, a metalloid oxide, a titanium-containing oxide, a polyphosphoric acid compound or the like, the average particle size thereof may be preferably 1 nm or more and 1 µm or less. By setting the average particle size of the negative active material to be equal to or more than the lower limit, the negative active material is easily produced or handled. By setting the average particle size of the negative active material to be equal to or less than the above upper limit, the electron conductivity of the negative active material layer 6 is improved. A crusher, a classifier, and the like are used to obtain a powder having a predetermined particle size. The crushing method and the powder classification method can be selected from, for example, the methods mentioned for the positive electrode layer 1.

The content of the negative electrode active material in the negative active material layer 6 is preferably 10% by mass or more and 95% by mass or less, more preferably 30% by mass or more, and still more preferably 50% by mass or more. By setting the content of the negative active material within the above range, the electric capacity of an energy storage element 10 can be further increased.

When the negative active material layer 6 contains a solid electrolyte, the content of the solid electrolyte is preferably 5% by mass or more and 90% by mass or less, more preferably 20% by mass or more and 70% by mass or less, and may be still more preferably 50% by mass or less. By setting the content of the solid electrolyte within the above range, the electric capacity of an energy storage element 10 can be further increased. When the sulfide solid electrolyte according to one embodiment of the present invention is used for the negative active material layer 6, the content of the sulfide solid electrolyte according to one embodiment of the present invention in an all-solid electrolyte in the negative active material layer 6 is preferably 50% by mass or more, more preferably 70 by mass or more%, still more preferably 90% by mass or more, and even more preferably substantially 100% by mass.

The mixture or composite of a negative active material and a solid electrolyte can be obtained by replacing the positive active material with a negative active material in the above-described mixture or composite of the positive active material and a solid electrolyte.

The average thickness of the negative active material layer 6 is preferably 30 µm or more and 1,000 µm or less, and more preferably 60 µm or more and 500 µm or less. By setting the average thickness of the negative active material layer 6 to be equal to or greater than the lower limit, an energy storage element 10 having a high energy density can be obtained. By setting the average thickness of the negative active material layer 6 to be equal to or less than the upper limit, the size of an energy storage element 10 can be reduced.

### [Isolation layer]

The isolation layer 3 contains a solid electrolyte. As the solid electrolyte contained in the isolation layer 3, various kinds of solid electrolytes can be used in addition to the sulfide solid electrolyte according to one embodiment of the present invention described above, and among them, a sulfide solid electrolyte is preferably used. The content of the solid electrolyte in the isolation layer 3 is preferably 70% by mass or more, more preferably 90 by mass or more%, still more preferably 99% by mass or more, and may be even more preferably substantially 100% by mass. When the sulfide solid electrolyte according to one embodiment of the present invention is used for the isolation layer 3, the content of the sulfide solid electrolyte according to one embodiment of the present invention in an all-solid electrolyte in the isolation layer 3 is preferably 50% by mass or more, more preferably 70 by mass or more%, still more preferably 90% by mass or more, and even more preferably substantially 100% by mass.

The isolation layer 3 may contain optional components that are an oxide such as Li₃PO₄, a halogen compound, a binder, a thickener, a filler, and the like. The optional components such as a binder, a thickener, and a filler can be selected from the materials mentioned for the positive active material layer 5.

The average thickness of the isolation layer 3 is preferably 1 µm or more and 50 µm or less, and more preferably 3 µm or more and 20 µm or less. By setting the average thickness of the isolation layer 3 to be equal to or greater than the lower limit, the positive electrode layer 1 and the negative electrode layer 2 can be highly reliably insulated. By setting the average thickness of the isolation layer 3 to be equal to or less than the upper limit, the energy density of an energy storage element 10 can be increased.

The energy storage element of the present embodiment can be mounted as an energy storage unit (battery module) configured by assembling multiple energy storage elements on a power source for an automobile such as an electric vehicle (EV), a hybrid vehicle (HEV), or a plug-in hybrid vehicle (PHEV); a power source for an electronic device such as a personal computer, or a communication terminal; a power source for power storage; or the like. In this case, the technique according to one embodiment of the present invention may be applied to at least one energy storage element contained in the energy storage unit.

Fig. 2 shows an example of an energy storage apparatus 30 formed by assembling energy storage units 20 in each of which two or more electrically-connected energy storage elements 10 are assembled. The energy storage apparatus 30 may include a busbar (not illustrated) for electrically connecting two or more energy storage elements 10, a busbar (not illustrated) for electrically connecting two or more energy storage units 20, and the like. The energy storage unit 20 or the energy storage apparatus 30 may include a state monitor (not illustrated) for monitoring the state of one or more energy storage elements.

### <Method for Producing Energy Storage Element>

The method for producing an energy storage element according to one embodiment of the present invention can be performed by a generally known method except that the sulfide solid electrolyte according to one embodiment of the present invention is used for preparing at least one of the positive electrode layer, the isolation layer, and the negative electrode layer. Specifically, the production method includes, for example, (1) providing a positive composite, (2) providing a material for an isolation layer, (3) providing a negative composite, and (4) stacking a positive electrode layer, an isolation layer, and a negative electrode layer. Hereinafter, each step will be described in detail.

### (1) Step of providing positive composite

In this step, a positive composite for forming a positive electrode layer (positive active material layer) is usually prepared. The method for preparing the positive composite is not particularly limited, and can be appropriately selected according to the purpose. Examples of the method include a mechanical milling treatment of a material for the positive composite, compression molding of a positive active material, and sputtering using a target material for the positive active material. When the positive composite contains a mixture or composite containing a positive active material and a solid electrolyte, this step can include mixing a positive active material and a solid electrolyte by using, for example, a mechanical milling method to prepare a mixture or composite of the positive active material and the solid electrolyte.

### (2) Step of providing material for isolation layer

In this step, a material for an isolation layer for forming the isolation layer is usually prepared. When the energy storage element is a lithium ion energy storage element, the material for an isolation layer can be set to a solid electrolyte. The solid electrolyte as the material for an isolation layer can be prepared by a conventionally known method. For example, the solid electrolyte can be obtained by treating predetermined materials by a mechanical milling method. The material for an isolation layer may be prepared by heating predetermined materials to a melting temperature or higher by a melt quenching method, melting and mixing the materials at a predetermined ratio, and quenching the obtained mixture. Examples of another method for synthesizing the material for an isolation layer include a solid phase method of sealing under reduced pressure and firing, a liquid phase method such as dissolution precipitation, a gas phase method (PLD), and firing under an argon atmosphere after mechanical milling.

### (3) Step of providing negative composite

In this step, a negative composite for forming a negative electrode layer (negative active material layer) is usually prepared. The specific method for preparing the negative composite is the same as that for the positive composite. When the negative composite contains a mixture or composite containing a negative active material and a solid electrolyte, this step can include mixing a negative active material and a solid electrolyte by using, for example, a mechanical milling method to prepare a mixture or composite of the negative active material and the solid electrolyte.

### (4) Stacking step

In this step, for example, a positive electrode layer including a positive electrode substrate and a positive active material layer, an isolation layer, and a negative electrode layer including a negative electrode substrate and a negative active material layer are stacked. In this step, the positive electrode layer, the isolation layer, and the negative electrode layer may be sequentially formed in this order, or vice versa, and the order of formation of the layers is not particularly limited. The positive electrode layer is formed, for example, by pressure-molding a positive electrode substrate and a positive composite, the isolation layer is formed by pressure-molding a material for an isolation layer, and the negative electrode layer is formed by pressure-molding a negative electrode substrate and a negative composite. The positive electrode layer, the isolation layer, and the negative electrode layer may be stacked by pressure-molding a positive electrode substrate, a positive composite, a material for an isolation layer, a negative composite, and a negative electrode substrate at a time. The positive electrode layer and the negative electrode layer may be each formed in advance, and stacked by pressure-molding together with an isolation layer.

### [Other embodiments]

The present invention is not limited to the above embodiments, and can be carried out in various aspects with alterations and/or improvements being made in addition to the above aspects. For example, the energy storage element according to the present invention may include a layer other than the positive electrode layer, the isolation layer, and the negative electrode layer. The energy storage element according to the present invention may contain a liquid. As such an energy storage element, for example, an energy storage element in which gaps between a positive active material layer 5, an isolation layer 3, a negative active material layer 6, and the like in the above-described energy storage element 10 are filled with a nonaqueous electrolyte solution containing an Ionic liquid or the like, can be mentioned. The energy storage element according to the present invention may be a capacitor or the like in addition to the energy storage element that is a secondary battery.

Further, the calculation of the hydration energy for specifying the sulfide solid electrolyte according to one aspect of the present invention is based on the specific conditions described in the above embodiments, but the method for selecting elements according to one aspect of the present invention is not limited to the above specific conditions. For example, in the method for selecting elements for a sulfide solid electrolyte according to one aspect of the present invention, calculation conditions other than the calculation conditions described in the above embodiments may be employed, and first-principle calculation may be performed based on a reaction formula other than the formula i or ii described in the above embodiments and a crystal structure other than the crystal structures described in the above embodiments. Further, the first-principle calculation may be performed by using calculation software that is different from that in the above embodiments. In addition, a combination other than the combinations of a divalent element A and a halogen element X described in the above embodiments can also be evaluated by the same method.

### <Examples>

Hereinafter, the present invention will be further specifically described by way of examples, but the present invention is not limited to the following examples.

### [Example 1]

By the following treatment, 85(0.75Li₂S·0.25P₂S₅)·15Ca_{0.5}I(Li₃Ca_{0.18}PS₄I_{0.35}) was synthesized.

In a glove box in an argon atmosphere having a dew point of -50°C or lower, Li₂S (99.98%, Aldrich), P₂S₅ (99%, Aldrich), and Ca_{0.5}I were weighed so as to have a molar ratio of 63.75 : 21.25 : 15, and then mixed in a mortar to prepare a composition containing Li, P, S, Ca, and I.

The composition was charged into a closed 80 mL zirconia pot containing 160 g of zirconia balls of 4 mm in diameter. The mechanical milling treatment was performed for 45 hours at a revolution of 510 rpm by a planetary ball mill (from FRITSCH, model number: Premium line P-7) to obtain an intermediate.

The obtained intermediate was heated (heat-treated) at 220°C for 2 hours to obtain a sulfide solid electrolyte of Example 1. The heating temperature was set to be around the crystallization temperature within the range of the crystallization temperature ± 50°C. The crystallization temperature was determined by taking out a part of the intermediate after mechanical milling treatment and subjecting the part to DSC measurement. The DSC measurement was performed under the following conditions. That is, the temperature was raised from room temperature to 400°C at 10°C/min using a DSC device (Thermo Plus DSC8230 from Rigaku Corporation) and a hermetically sealed pan made of SUS.

### [Examples 2 to 6, Comparative Examples 1 to 5, and Reference Examples 1 to 2]

Sulfide solid electrolytes of Examples 2 to 6, Comparative Examples 1 to 5, and Reference Examples 1 and 2 were obtained in the same manner as in Example 1 except that the compositions and heat treatment temperature of each of the sulfide solid electrolyte were set as follows. Each heating temperature is a temperature within the range of the crystallization temperature ± 50°C, which is determined in the same manner as in Example 1 above.
Example 2: 85(0.75Li2S ·0.25P2S5) ·5Ca_{0.5}I·10LiI, heating temperature 205°C
Example 3: 85(0.75Li₂S 0.25P₂S₅) ·5Ba_{0.5}I ·10LiI, heating temperature 170°C
Example 4: 85(0.75Li₂S 0.25P₂S₅) ·5Zn_{0.5}I ·10LiI, heating temperature 175°C
Example 5: 85(0.75Li₂S 0.25P₂S₅) ·5Mn_{0.5}I ·10LiI, heating temperature 190°C
Example 6: 85(0.75Li2S ·0.25P₂S₅) ·2.5Ca_{0.5}I ·12.5LiI, heating temperature 205°C
Comparative Example 1: 85(0.75Li₂S ·0.25P₂S₅) ·15LiI, heating temperature 180°C
Comparative Example 2: 85(0.75Li₂S ·0.25P₂S₅) ·15Mg_{0.5}I, heating temperature 220°C
Comparative Example 3: 85(0.75Li₂S ·0.25P₂S₅) ·5KI ·10LiI, heating temperature 175°C
Comparative Example 4: 75Li₂S ·25P₂S₅, no heat treatment
Comparative Example 5: 73.5Li₂S ·25P₂S₅ ·1.5CaS, no heat treatment
Reference Example 1: 70Li₂S ·30P₂S₅, heating temperature 300°C
Reference Example 2: 98(0.70Li₂S ·0.30P₂S₅) ·2Ca_{0.5}I, heating temperature 300°C

### [Evaluation]

### (1) Powder X-ray diffraction measurement

Powder X-ray diffraction measurement was performed for each of sulfide solid electrolytes of Examples 1 to 6, and Comparative Examples 1 to 5, and Reference Examples 1 and 2 by the above method. As an airtight sample holder for X-ray diffraction measurement, trade name "general-purpose atmosphere separator" from Rigaku Corporation was used. In X-ray diffraction diagrams of the sulfide solid electrolytes of Examples 1 to 6, and Comparative Examples 1 to 3, it was able to be confirmed that all the sulfide solid electrolytes had diffraction peaks derived from HICP in a range of 2θ = 19.9° ± 0.5° and a range of 2θ = 23.6° ± 0.5°. In X-ray diffraction diagrams of the sulfide solid electrolytes of Examples 1, 4, and 5, and Comparative Example 2, it was confirmed that all the sulfide solid electrolytes had diffraction peaks derived from LICP in a range of 2θ = 21.0° ± 0.5° and a range of 28.0° ± 0.5°. In X-ray diffraction diagrams of the sulfide solid electrolytes of Comparative Examples 4 and 5, it was confirmed that there were no diffraction peaks, and the structure was an amorphous structure. In an X-ray diffraction diagram of the sulfide solid electrolyte of Reference Example 1, it was confirmed that there were diffraction peaks derived from a crystal phase of Li₇P₃S₁₁ in a range of 2θ = 17.8° ± 0.5°, a range of 18.5° ± 0.5°, a range of 23.7° ± 0.5°, a range of 29.6° ± 0.5°, and a range of 30.0° ± 0.5°. In an X-ray diffraction diagram of the sulfide solid electrolyte of Reference Example 2, diffraction peaks derived from a crystal phase of Li₄P₂S₆, and diffraction peaks that were not able to be attributed to any crystalline phase were detected. The measurement results are shown in Table 4. In Table 4, the term "unknown" means a crystal phase that cannot be attributed to any crystalline phase.

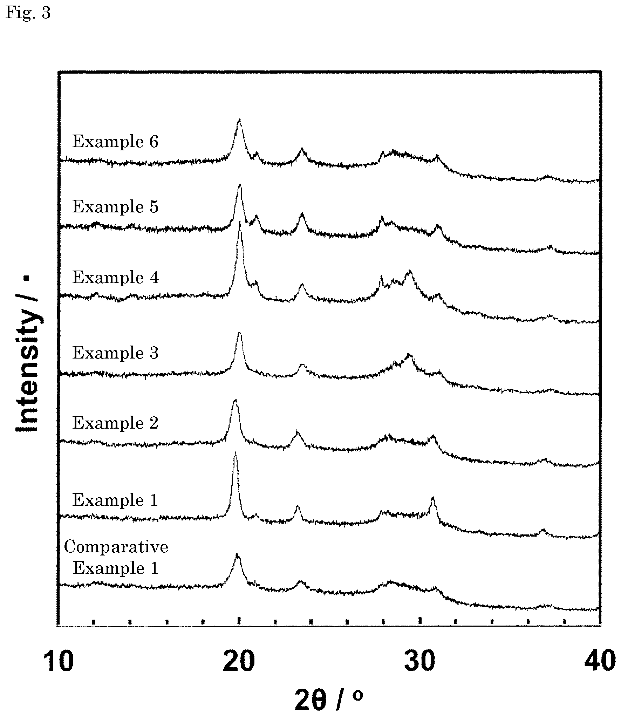

Fig. 3 shows X-ray diffraction diagrams of the sulfide solid electrolytes of Examples 1 to 6, and Comparative Example 1. The diffraction peaks derived from HICP in a range of 2θ = 19.9° ± 0.5° and a range of 2θ = 23.6° ± 0.5° can be confirmed. Further, it can be confirmed that the diffraction peaks in the range of 2θ = 19.9° ± 0.5° are each a diffraction peak having the highest diffraction intensity.

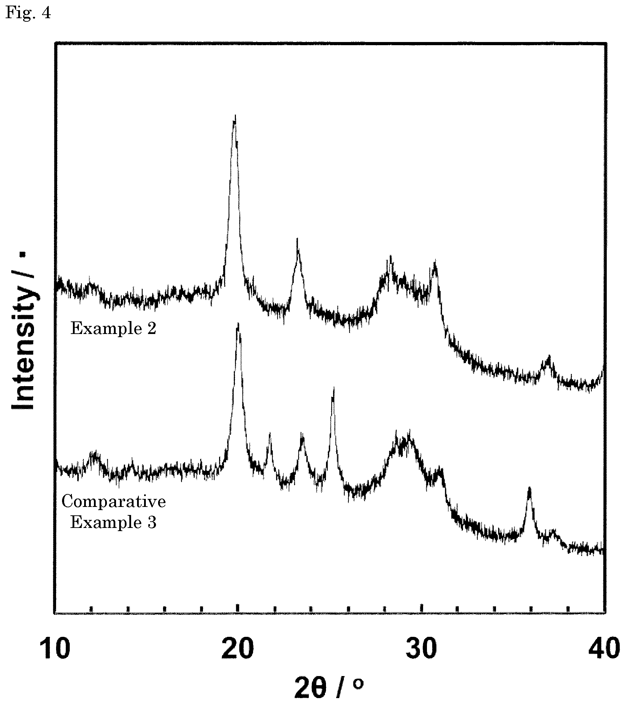

Fig. 4 shows X-ray diffraction diagrams of the sulfide solid electrolytes of Example 2, and Comparative Example 3. In the X-ray diffraction diagram of the sulfide solid electrolyte of Comparative Example 3, peaks derived from KI (2θ ≈ 21.8°, 25.2°, and 35.9°) can be confirmed. It is found that when a compound containing a monovalent element other than Li such as KI was used as a raw material, the crystal structure is not sufficiently broken during mechanical milling treatment, and the crystal structure of the compound as a raw material tends to remain.

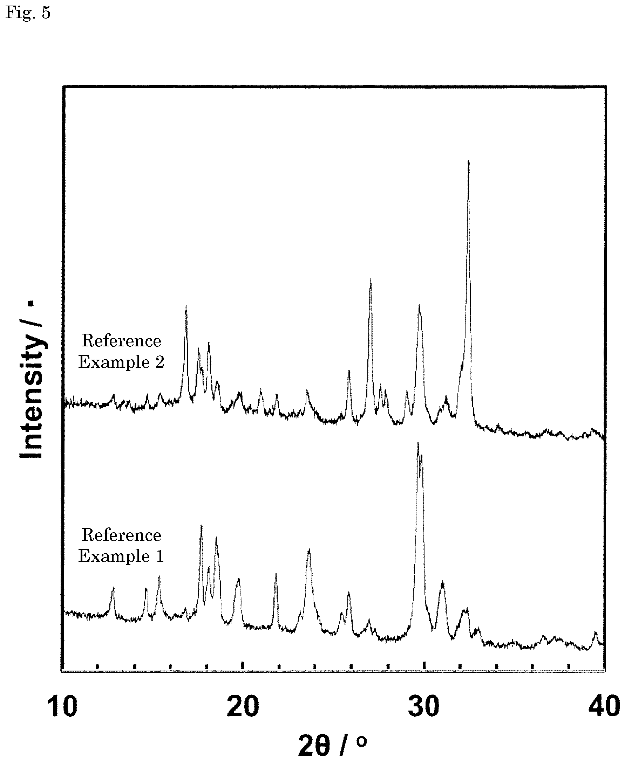

Further, Fig. 5 shows X-ray diffraction diagrams of sulfide solid electrolytes of Reference Examples 1 and 2. In the X-ray diffraction diagrams of sulfide solid electrolytes of Reference Examples 1 and 2, it was confirmed that there were no diffraction peaks in a range of 19.9° ± 0.5° and a range of 23.6° ± 0.5°.

### (2) Ionic conductivity

The ionic conductivity at -25°C (σ₂₅ₐ) of each of the sulfide solid electrolytes of Examples 1 to 6, Comparative Examples 1 to 5, and Reference Examples 1 and 2 was determined by measuring an alternating-current impedance by the above-described method using "VMP-300" from Bio-Logic Science Instruments. The measurement results are shown in Table 4.

### (3) Water resistance evaluation

For each of the sulfide solid electrolytes of Examples 1 to 6, Comparative Examples 1 to 5, and Reference Examples 1 and 2, water resistance was evaluated by the following procedures. For each of the sulfide solid electrolytes, the ionic conductivity at 25°C (σ₂₅ₐ) in (2) above was measured, and then each of the sulfide solid electrolytes was left to stand in a dry air atmosphere having a dew point of -35°C for 6 hours. Thereafter, the ionic conductivity at 25°C (σ_{25b}) of each of the solid electrolytes was measured in the same manner as in (2) above. As an evaluation index of water resistance, a ratio (σ_{25b}/σ₂₅ₐ) of the ionic conductivity after being left to stand in a dry air atmosphere (σ_{25b}) to the initial ionic conductivity before being left to stand in the dry air atmosphere (σ₂₅ₐ) was determined. The results are shown in Table 4.

### (4) Activation energy

The activation energy of ionic conductivity of each of the sulfide solid electrolytes of Examples 1 and 3 to 6, Comparative Examples 1 to 5, and Reference Example 1 was determined by measuring an alternating-current impedance by the above-described method using "VMP-300" from Bio-Logic Science Instruments. The measurement results are shown in Table 5.

**[Table 4]**

| | Composition formula | Crystal structure | A/Li | X/A | LiI/A_{0.5}X | σ₂₅ₐ /mS cm⁻¹ | σ_{25b} /mS cm⁻¹ | σ_{25b}/σ₂₅ₐ /% |
|---|---|---|---|---|---|---|---|---|
| Example 1 | Li₃Ca_{0.18}PS₄I_{0.35} | HICP + LICP | 0.059 | 2.0 | 0.0 | 1.98 | 1.21 | 61 |
| Example 2 | Li_{3.24}Ca_{0.06}PS₄I_{0.35} | HICP | 0.018 | 6.0 | 2.0 | 3.16 | 2.19 | 69 |
| Example 3 | Li_{3.24}Ba_{0.06}PS₄I_{0.35} | HICP | 0.018 | 6.0 | 2.0 | 1.64 | 1.00 | 61 |
| Example 4 | Li_{3.24}Zn_{0.06}PS₄I_{0.35} | HICP + LICP | 0.018 | 6.0 | 2.0 | 2.24 | 1.39 | 62 |
| Example 5 | Li_{3.24}Mn_{0.06}PS₄I_{0.35} | HICP + LICP | 0.018 | 6.0 | 2.0 | 2.64 | 1.83 | 69 |
| Example 6 | Li_{3.29}Ca_{0.03}PS₄I_{0.35} | HICP + LICP | 0.009 | 12.0 | 5.0 | 4.17 | 2.70 | 65 |
| Comparative Example 1 | Li_{3.35}PS₄I_{0.35} | HICP | 0.000 | - | - | 2.70 | 1.53 | 57 |
| Comparative Example 2 | Li₃Mg₀.₁₈PS₄I_{0.35} | HICP + LICP | (0.059) | (2.0) | (0) | 1.51 | 0.45 | 30 |
| Comparative Example 3 | Li_{3.24}K_{0.12}PS₄I_{0.35} | HICP + KI | (0.036) | (3.0) | (2.0) | 2.17 | 1.28 | 59 |
| Comparative Example 4 | Li₃PS₄ | Amorphous | - | - | - | 0.632 | 0.541 | 86 |
| Comparative Example 5 | L_{12.94}Ca_{0.03}PS₄ | Amorphous | 0.010 | - | - | 0.434 | 0.360 | 83 |
| Reference Example 1 | Li_{2.33}PS_{3.67} | Li₇P₃S₁₁ | - | - | - | 2.26 | 1.47 | 65 |
| Reference Example 2 | Li_{2.33}Ca_{0.02}PS_{3.67}I_{0.03} | Li₄P₂S₆ + unknown | 0.007 | 2.0 | 0.0 | 0.0706 | 0.0371 | 53 |

**[Table 5]**

| | Composition formula | Activation energy of ionic conduction /eV |
|---|---|---|
| Example 1 | Li₃Ca_{0.18}PS₄I_{0.35} | 0.32 |
| Example 3 | Li_{3.24}Ba_{00.6}PS₄I_{0.35} | 0.31 |
| Example 4 | Li_{3.24}Zn_{0.06}PS₄I_{0.35} | 0.30 |
| Example 5 | Li_{3.24}Mn_{0.06}PS₄I_{0.35} | 0.31 |
| Example 6 | Li_{3.29}Ca_{0.03}PS₄I_{0.35} | 0.29 |
| Comparative Example 1 | Li_{3.35}PS₄I_{0.35} | 0.29 |
| Comparative Example 2 | Li₃Mg_{0.18}PS₄I_{0.35} | 0.34 |
| Comparative Example 3 | Li_{3.24}K_{0.12}PS₄I_{0.35} | 0.32 |
| Comparative Example 4 | Li₃PS₄ | 0.35 |
| Comparative Example 5 | Li_{2.94}Ca_{0.03}PS₄ | 0.36 |
| Reference Example 1 | Li₇PS₃S₁₁ | 0.41 |

As shown in Table 5, it was confirmed that each of the sulfide solid electrolytes of Examples 1 and 3 to 6 had an activation energy of ionic conductivity of 0.34 eV or less.

As shown in Table 4, in each of the sulfide solid electrolytes of Examples 1 to 6 having diffraction peaks in a range of 19.9° ± 0.5° and a range of 23.6° ± 0.5° in the X-ray diffraction diagrams using a CuKα ray, the ratio (σ_{25b}/σ₂₅ₐ) of the ionic conductivity after being left to stand in a dry air atmosphere (σ_{25b}) to the ionic conductivity before being left to stand in a dry air atmosphere (σ₂₅ₐ) was 60% or more, and it was confirmed that each of the sulfide solid electrolytes had favorable water resistance. In addition, in each of the sulfide solid electrolytes of Examples 1 to 6, the ionic conductivity before being left to stand in a dry air atmosphere (σ₂₅ₐ) is 1.5 mS/cm or more, and the ionic conductivity was also favorable.

As shown in Table 3, the hydration energy of Ca_{0.5}I composed of Ca and I that are contained in each of the sulfide solid electrolytes of Examples 1, 2 and 6 is 9.3 meV/atom, the hydration energy of Ba_{0.5}I composed of Ba and I that are contained in the sulfide solid electrolyte of Example 3 is 5.9 meV/atom, the hydration energy of Zn_{0.5}I composed of Zn and I that are contained in the sulfide solid electrolyte of Example 4 is 88.8 meV/atom, and the hydration energy of Mn_{0.5}I composed of Mn and I that are contained in the sulfide solid electrolyte of Example 5 is 34.1 meV/atom, and all the hydration energies are greater than the hydration energy of LiI (-11.5 meV/atom). Further, the ratios (σ_{25b}/σ₂₅ₐ) in the sulfide solid electrolytes of Examples 1 to 6 are each greater than the ratio (σ_{25b}/σ₂₅ₐ) in the sulfide solid electrolyte of Comparative Example 1. In contrast, the hydration energy of Mg_{0.5}I composed of Mg and I that are contained in the sulfide solid electrolyte of Comparative Example 2 is -17.2 meV/atom, smaller than the hydration energy of LiI, and the ratio (σ_{25b}/σ₂₅ₐ) in the sulfide solid electrolyte of Comparative Example 2 is smaller than the ratio (σ_{25b}/σ₂₅ₐ) in the sulfide solid electrolyte of Comparative Example 1. The hydration energy of KI composed of K and I that are contained in the sulfide solid electrolyte of Comparative Example 3 was 47.9 meV/atom and greater than the hydration energy of LiI, but the ratio (σ_{25b}/σ₂₅ₐ) in the sulfide solid electrolyte of Comparative Example 3 was less than 60% and smaller than the ratio (σ_{25b}/σ₂₅ₐ) in the sulfide solid electrolytes of Examples, and the water resistance was not sufficiently improved. In Comparative Example 3, it is considered that the crystal structure of KI as a raw material remained as described above, and thus, the water resistance was not significantly improved.

In the sulfide solid electrolyte of Comparative Example 5 containing Ca and I and having no diffraction peaks in an X-ray diffraction diagram using a CuKα ray, the ratio (σ_{25b}/σ₂₅ₐ) was 80% or more, but the ionic conductivity (σ₂₅ₐ) before being left to stand in a dry air atmosphere was 0.434 mS/cm, and the ionic conductivity was low. Further, the ratio (σ_{25b}/σ₂₅ₐ) in the sulfide solid electrolyte of Comparative Example 5 was smaller than the ratio (σ_{25b}/σ₂₅ₐ) in the sulfide solid electrolyte of Comparative Example 4 containing no Ca, and it was confirmed that the water resistance was not improved.

In the sulfide solid electrolyte of Reference Example 2, which had no diffraction peaks in a range of 19.9° ± 0.5° and a range of 23.6° ± 0.5° in an X-ray diffraction diagram using a CuKα ray, the ratio (σ_{25b}/σ₂₅ₐ) was less than 60%, and it was confirmed that the water resistance was not sufficient. Further, in the sulfide solid electrolyte of Reference Example 2, the ionic conductivity (σ₂₅ₐ) before being left to stand in a dry air atmosphere was less than 0.10 mS/cm, and it was confirmed that the ionic conductivity was low. In addition, the ratio (σ_{25b}/σ₂₅ₐ) in the sulfide solid electrolyte of Reference Example 2 was smaller than the ratio (σ_{25b}/σ₂₅ₐ) in the sulfide solid electrolyte of Reference Example 1 containing no Ca and I, and it was confirmed that the water resistance was not improved even if Ca and I were contained.

From these results, it is found that when a sulfide solid electrolyte has diffraction peaks in a range of 19.9° ± 0.5° and a range of 23.6° ± 0.5° in an X-ray diffraction diagram using a CuKα ray and contains a divalent element A and a halogen element X, which are a combination in which the hydration energy of a compound A_{0.5}X is greater than the hydration energy of LiI, the water resistance is sufficiently improved.

### INDUSTRIAL APPLICABILITY

The sulfide solid electrolyte according to the present invention is suitably used as a solid electrolyte for an energy storage element such as an all-solid-state battery.

### DESCRIPTION OF REFERENCE SIGNS

1: positive electrode layer
2: negative electrode layer
3: isolation layer
4: positive electrode substrate
5: positive active material layer
6: negative active material layer
7: negative electrode substrate
10: energy storage element (all-solid-state battery)
20: energy storage unit
30: energy storage apparatus

## Claims

1. A sulfide solid electrolyte, having diffraction peaks in a range of 19.9° ± 0.5° and a range of 23.6° ± 0.5° in an X-ray diffraction diagram using a CuKα ray, and
comprising one or two or more kinds of divalent elements A and one or two or more kinds of halogen elements X,
wherein the divalent element A and the halogen element X are a combination in which hydration energy of a compound A_{0.5}X comprising the divalent element A and the halogen X is greater than hydration energy of LiI.

2. The sulfide solid electrolyte according to claim 1, wherein the divalent element A and the halogen element X are a combination in which hydration energy of a compound A_{0.5}X comprising the divalent element A and the halogen element X is -4 meV/atom or more.

3. The sulfide solid electrolyte according to claim 2, wherein the divalent element A and the halogen element X are a combination in which hydration energy of a compound A_{0.5}X comprising the divalent element A and the halogen element X is 0 meV/atom or more.

4. The sulfide solid electrolyte according to claim 3, wherein the divalent element A and the halogen element X are a combination in which hydration energy of a compound A_{0.5}X comprising the divalent element A and the halogen element X is 2 meV/atom or more.

5. The sulfide solid electrolyte according to claim 4, wherein the divalent element A and the halogen element X are a combination in which hydration energy of a compound A_{0.5}X comprising the divalent element A and the halogen element X is 4 meV/atom or more.

6. The sulfide solid electrolyte according to any one of claims 1 to 5, wherein the divalent element A and the halogen element X are a combination in which hydration energy of a compound A_{0.5}X comprising the divalent element A and the halogen element X is 200 meV/atom or less.

7. The sulfide solid electrolyte according to any one of claims 1 to 6, wherein the sulfide solid electrolyte satisfies any of the following a to c:
a: the divalent element A is one or two or more kinds of elements selected from the group consisting of Ca, Sr, Ba, Mn, and Zn, and the halogen element X is one or two or more kinds of elements selected from the group consisting of F, Cl, Br, and I;
b: the divalent element A is Mg, and the halogen element X is F; and
c: the divalent element A is Cu, and the halogen element X is one or two or more kinds of elements selected from the group consisting of Cl, Br, and I.

8. The sulfide solid electrolyte according to claim 7, wherein the sulfide solid electrolyte satisfies either the following a1 or a2:
a 1: the divalent element A is one or two or more kinds of elements selected from the group consisting of Ca, Ba, Mn, and Zn, and the halogen element X is one or two or more kinds of elements selected from the group consisting of F, Cl, Br, and I; and
a2: the divalent element A is Sr, and the halogen element X is one or two or more kinds of elements selected from the group consisting of F, Cl, and Br.

9. The sulfide solid electrolyte according to any one of claims 1 to 8, comprising I.

10. The sulfide solid electrolyte according to any one of claims 1 to 9, further comprising Li,
wherein
a molar ratio of a content of the divalent element A to a content of the Li is 0.001 or more, and
a molar ratio of a content of the halogen element X to a content of the divalent element A is 2 or more.

11. The sulfide solid electrolyte according to claim 10, wherein a molar ratio of a content of the divalent element A to a content of the Li is 0.018 or more.

12. The sulfide solid electrolyte according to any one of claims 1 to 11, represented by the following formula 1:
[Chemical Formula 1]
(100 - y - z - z')[xLi₂S ·(1 - x)P₂S₅] ·yA_{0.5}X ·zLiI ·z'LiX' wY ··· 1
wherein A is the divalent element A, X is the halogen element X, X' is a halogen element other than I, Y is one or two or more kinds of elements other than Li, P, S, I, A, X, and X', x is the number of 0.5 or more and 0.8 or less, y is the number greater than 0 and 30 or less, z is the number of 0 or more and 30 or less, z' is the number of 0 or more and 30 or less, and w is the number of 0 or more and 20 or less.

13. The sulfide solid electrolyte according to claim 12, wherein a ratio (z/y) of the z to the y is 0 or more and 10 or less in the formula 1.

14. The sulfide solid electrolyte according to any one of claims 1 to 13, comprising P,
wherein a molar ratio of a content of the divalent element A to a content of the P is 0.01 or more and 0.4 or less.

15. The sulfide solid electrolyte according to any one of claims 1 to 14, comprising P and Li,
wherein a molar ratio of a content of the Li to a content of the P is 1 or more and 5 or less.

16. The sulfide solid electrolyte according to any one of claims 1 to 15, comprising P and S,
wherein a molar ratio of a content of the S to a content of the P is 2 or more and 6 or less.

17. The sulfide solid electrolyte according to any one of claims 1 to 16, comprising P,
wherein a molar ratio of a content of the halogen element X to a content of the P is 0.1 or more and 2 or less.

18. The sulfide solid electrolyte according to any one of claims 1 to 17, wherein an ionic conductivity is 1 mS/cm or more at 25°C.

19. The sulfide solid electrolyte according to any one of claims 1 to 18, wherein the diffraction peak in a range of 19.9° ± 0.5° is a diffraction peak with the highest diffraction intensity, a diffraction peak with the second highest diffraction intensity, a diffraction peak with the third highest diffraction intensity, or a diffraction peak with the fourth highest diffraction intensity, in an X-ray diffraction diagram using a CuKα ray.

20. The sulfide solid electrolyte according to any one of claims 1 to 19, wherein activation energy of the ionic conductivity is 0.34 eV or less.

21. The sulfide solid electrolyte according to any one of claims 1 to 20, further comprising a divalent element B other than the divalent element A,
wherein a molar ratio of a content of the divalent element B to the total content of the divalent element A and the divalent element B is less than 0.5.

22. The sulfide solid electrolyte according to any one of claims 1 to 21, wherein the sulfide solid electrolyte substantially contains no divalent element B other than the divalent element A.

23. A method for selecting elements for a sulfide solid electrolyte, comprising,
selecting a divalent element A and a halogen element X in a sulfide solid electrolyte containing one or two or more kinds of the divalent elements A and one or two or more kinds of the halogen elements X,
wherein in the selecting, a combination in which hydration energy of a compound A_{0.5}X comprising the divalent element A and the halogen element X is greater than hydration energy of LiI, determined by first-principle calculation is selected.

24. A sulfide solid electrolyte, having diffraction peaks in a range of 19.9° ± 0.5° and a range of 23.6° ± 0.5° in an X-ray diffraction diagram using a CuKα ray, and
comprising one or two or more kinds of divalent elements A and one or two or more kinds of halogen elements X, selected by the method for selecting elements according to claim 23.

25. A method for producing a sulfide solid electrolyte, comprising treating a composition containing one or two or more kinds of divalent elements A and one or two or more kinds of halogen elements X, selected by the method for selecting elements according to claim 23.

26. A method for producing a sulfide solid electrolyte, comprising treating a composition containing one or two or more kinds of divalent elements A and one or two or more kinds of halogen elements X,
wherein the divalent element A and the halogen element X are a combination in which hydration energy of a compound A_{0.5}X comprising the divalent element A and the halogen element X is greater than hydration energy of LiI.

27. The method for producing a sulfide solid electrolyte according to claim 25 or 26, wherein
the composition contains no lithium halide.

28. An energy storage element comprising the sulfide solid electrolyte according to any one of claims 1 to 22 or claim 24.

29. An electronic device comprising the energy storage element according to claim 28.

30. An automobile comprising the energy storage element according to claim 28.
